# EUROPÄISCHE PATENTSCHRIFT

(11) **EP 3 668 913 B1**
(45) Veröffentlichungstag und Bekanntmachung des Hinweises auf die Patenterteilung: **05.05.2021**
(21) Anmeldenummer: 18750234.9
(22) Anmeldetag: 13.08.2018
(51) Int. Cl.: C08G 18/79, C08G 18/24, C09D 175/04, C08G 18/32

(54) **SAURES INDIKATORSYSTEM**
ACIDIC INDICATOR SYSTEM
SYSTÈME INDICATEUR D'ACIDITÉ

(30) Priorität: 16.08.2017 EP 17186369
(43) Veröffentlichungstag der Anmeldung: 24.06.2020
(73) Patentinhaber: Covestro Intellectual Property GmbH & Co. KG, 51373 Leverkusen (DE)
(72) Erfinder: WEIKARD, Jan, 51375 Leverkusen (DE); KRÖGER, Lydia, 50733 Köln (DE); RUIZ, Emma Jeanne Pauline, 68280 Andolsheim (FR)
(74) Vertreter: Levpat
(86) Internationale Anmeldenummer: PCT/EP2018/071889
(87) Internationale Veröffentlichungsnummer: WO 2019/034586

(56) Entgegenhaltungen:
- WO-A1-2009/127182

## Beschreibung

Die Erfindung betrifft ein Indikatorsystem, ein Verfahren zur optischen Anzeige des Aushärtungsfortschritts einer Zusammensetzung, die Verwendung von Farbstoffen mit Xanthen-Grundgerüst zur optischen Anzeige des Aushärtungsfortschritts von Zusammensetzungen, ein Kit-of-parts sowie ein Verfahren zur Erhöhung der Taktfrequenz zwischen einem Beschichtungsschritt und einem weiteren nachfolgenden Verarbeitungsschritt von Objekten.

Bei Beschichtungsprozessen besteht der Bedarf, diese möglichst schnell und damit kostengünstig ablaufen zu lassen. Dabei ist von Vorteil, wenn es eine einfache Möglichkeit gibt, festzustellen, ob ein Beschichtungsmittel bereits den zur Weiterverarbeitung gewünschten Aushärtegrad besitzt. Insbesondere bei nicht automatisierten Beschichtungsprozessen, die einer Vielzahl von den Aushärteprozess beeinflussenden Variablen wie beispielsweise Umgebungstemperatur, Luftfeuchte, Luftbewegung, Substrattemperatur, Lacktemperatur ausgesetzt sind, beispielsweise bei der Autoreparaturlackierung ist ein zuverlässiges Anzeigen des Aushärtegrades wichtig. Beispielsweise birgt ein Berühren der noch nicht vollständig ausgehärteten Lackierung auf einem Auto immer das Risiko, die weiche Lackschicht zu beschädigen. Die Anzeige der Aushärtung sollte daher berührungslos, z.B. durch eine farbliche Veränderung erfolgen. Um den dekorativen Aspekt der Lackierung nicht zu verändern, sollte die farbliche Veränderung immer ein Verschwinden der sichtbaren Färbung sein, d.h. der Farbstoff sollte in der ausgehärteten Lackschickt farblos sein.

WO 2003/062287 beschreibt durch Einfluss von UV-Licht härtende Klebstoffe auf Basis von Acrylaten und/oder Methacrylaten, die mit einem Farbstoff versehen sind, der sich bei der Aushärtung durch UV-Licht induzierte radikalische Polymerisation farblich verändert. Als Farbstoffklassen werden sowohl Xanthen- als auch Anthrachinonfarbstoffe offenbart. Nachteilig ist das der als Indikator verwendete Farbstoff immer dem Klebstoff zugesetzt wird, wodurch die Verwendung auf chemisch kompatible Zusammensetzungen beschränkt, und damit nur sehr eingeschränkt verwendbar ist

WO 2009/127182 offenbart härtbare Massen, welche aus mindestens einer Polyol-Komponente und mindestens einer Isocyanat-Komponente hergestellt sind, die einen Farbindikator zur Anzeige des Aushärtungsfortschritts enthalten. Als Farbindikatoren werden Farbstoffe verwendet, die eine nichtaromatische chinoide Gruppe aufweisen. Nachteilig ist, dass die eingesetzten Farbstoffe nach erfolgter Härtung der Masse eine Färbung behalten und diese somit einfärben, wodurch ihr Einsatz in farblosen härtbaren Mischungen, wie beispielsweise Klarlacken ausgeschlossen ist.

Die WO 2009/47663 beschreibt ein System zur Hautversiegelung mit einem filmformenden Polymer, das einen Indikatorfarbstoff aufweist, der sich farblich verändert, wenn die applizierte Zusammensetzung einer Phasenveränderung unterliegt. Als filmformende Polymere werden durch radikalische Polymerisation härtende Cyanoacrylatklebstoffe, Tosylamid-Formaldehyd-Klebstoffe, Epoxid-basierte Klebstoffe und durch Verdunstung von Lösemitteln härtende und nicht näher beschriebene Filmformer erwähnt. Als Indikatorfarbstoffe werden verschiedene Fluorescein-Derivate offenbart, die der applizierten Zusammensetzung zugesetzt werden. Nachteilig ist vor allem, dass die verwendeten Fluorescein-Derivate auch die ausgehärtete Zusammensetzung stark einfärben, wodurch ein Einsatz in Klarlacken ausgeschlossen ist.

Nachteilig bei den in Stand der Technik offenbarten Indikatorfarbstoffen, ist daher, dass diese entweder in der ausgehärteten Zusammensetzung nicht farblos sind, wodurch ein Einsatz in farblosen Beschichtungen wie bespielweise Klarlacken ausgeschlossen ist, in basischen Systemen nicht anwendbar sind oder dass die verwendeten Farbstoffen nur in Zusammensetzungen verwendet werden, die durch radikalische Polymerisation aushärten. Eine mögliche Verwendung in Zusammensetzungen, die durch eine Polyadditionsreaktion aushärten wie beispielsweise bei Polyurethan-bildenden Zusammensetzungen ist daher nicht absehbar, da hier immer die Gefahr besteht, dass der Farbstoff mit reaktiven Komponenten abreagieren kann und dadurch die optische Anzeige des Aushärtungsfortschritts verfälscht werden kann.

Aufgabe der vorliegenden Erfindung war es demnach, ein Indikatorsystem zur Verfügung zu stellen, dass die Aushärtung auch von basischen Zusammensetzung enthaltend isocyanathaltige und isocyanatreaktive Komponenten durch eine sichtbare Farbveränderung zuverlässig anzeigt, ohne die Zusammensetzung im ausgehärteten Zustand einzufärben.

Es wurde überraschend gefunden, dass die gestellte Aufgabe durch das erfindungsgemäße Indikatorsystem gelöst werden kann, wobei der als Indikator verwendete Farbstoff gegebenenfalls auf einem inerten Träger aufgebracht sein kann.

Gegenstand der Erfindung ist daher ein Indikatorsystem beinhaltend eine Zusammensetzung, welche mindestens eine NCO-reaktive Verbindung und mindestens ein Polyisocyanat enthält, mindestens eine Protonenquelle und mindestens einen Indikatorfarbstoff, wobei der mindestens eine Indikatorfarbstoff zumindest ein Xanthen-Grundgerüst aufweist, zur Anzeige der Aushärtung der Zusammensetzung durch Farbänderung des mindestens einen Indikatorfarbstoffs, dadurch gekennzeichnet, dass der mindestens eine Indikatorfarbstoff nach Inkontaktbringen mit der ungehärteten Zusammensetzung eine erste Farbe aufweist und in der ausgehärteten Zusammensetzung farblos ist.

In einer bevorzugten Ausführungsform des erfindungsgemäßen Indikatorsystems sind der mindestens eine Indikatorfarbstoff und die mindestens eine Protonenquelle auf einer Oberfläche eines inerten Trägers aufgebracht, wobei der inerte Träger gegebenenfalls mit einer zweiten Oberfläche, welche von der ersten Oberfläche abgewandt ist, auf einem zweiten inerten Träger aufgebracht ist, wobei der zweite Träger vorzugsweise ausgewählt ist aus der Gruppe bestehend aus Polymerfolien, Metallfolien, Papier und/oder Karton und wobei der inerte Träger farblos und transparent und der zweite Träger vorzugsweise weiß ist.

In einer bevorzugten Ausführungsform des erfindungsgemäßen Indikatorsystems weist der mindestens eine Indikatorfarbstoff zumindest ein Fluoran-Grundgerüst auf, vorzugsweise ausgewählt ist aus der Gruppe der Fluorescein- und Rhodaminderivate, die eine Spirolactonform bilden können, und / oder Mischungen aus mindestens zwei hieraus.

In einer bevorzugten Ausführungsform des erfindungsgemäßen Indikatorsystems ist die mindestens eine Protonenquelle eine Brønsted-Säure, vorzugsweise eine nichtpolymere Säure, bevorzugter eine nichtpolymere, filmbildende Säure.

In einer bevorzugten Ausführungsform des erfindungsgemäßen Indikatorsystems ist die Brønsted-Säure ausgewählt aus der Gruppe bestehend aus nichtpolymeren Carbonsäuren, Hydroxycarbonsäuren, organisch substituierter Phosphor- und Sulfonsäuren und / oder Mischungen aus mindestens zwei hieraus.

In einer bevorzugten Ausführungsform des erfindungsgemäßen Indikatorsystems ist das mindestens eine Polyisocyanat in der Zusammensetzung ein aliphatisches und/oder cycloaliphatisches Polyisocyanat, wobei das Polyisocyanat vorzugsweise ausgewählt ist aus der Gruppe bestehend aus Derivaten des Hexamethylendiisocyanats und / oder des Pentamethylendiisocyanats.

In einer bevorzugten Ausführungsform des erfindungsgemäßen Indikatorsystems ist die mindestens eine NCO-reaktive Verbindung ausgewählt aus der Gruppe bestehend aus Polyasparaginsäureestern, Polyacrylatpolyolen, Polyesterpolyolen und / oder Mischungen aus mindestens zwei hieraus.

In einer bevorzugten Ausführungsform des erfindungsgemäßen Indikatorsystems ist die Zusammensetzung ein Polyurethan- und / oder Polyharnstofflack, vorzugsweise ein Polyurethan- und / oder Polyharnstoff-Refinish-Klarlack, insbesondere ein Refinish-Klarlack auf Basis von Polyasparaginsäureesterderivaten.

Ebenfalls Gegenstand der Erfindung ist ein Verfahren zur optischen Anzeige des Aushärtungsfortschritts einer Zusammensetzung, welche mindestens eine NCO-reaktive Verbindung und mindestens ein Polyisocyanat enthält, dadurch gekennzeichnet, dass das Verfahren die folgenden Schritte umfasst:
(a) Bereitstellen mindestens eines Indikatorfarbstoffs und mindestens einer Protonenquelle, wobei der mindestens eine Indikatorfarbstoff zumindest ein Xanthen-Grundgerüst aufweist, und wobei der mindestens eine Indikatorfarbstoff und die mindestens eine Protonenquelle auf einer Oberfläche eines inerten Trägers aufgebracht sind,
(b) Inkontaktbringen des mindestens einen Indikatorfarbstoffs und der mindestens einen Protonenquelle aus Schritt (a) mit der ungehärteten Zusammensetzung, wobei der mindestens eine Indikatorfarbstoff eine erste Farbe aufweist, und
(c) Härten der Zusammensetzung, wobei der mindestens eine Indikatorfarbstoff durch Farbumschlag von der ersten Farbe nach farblos die Aushärtung der Zusammensetzung anzeigt.

In einer bevorzugten Ausführungsform des erfindungsgemäßen Verfahrens ist der inerte Träger eine Polymerfolie oder ein Glasfaservlies, bevorzugt eine Polymerfolie, insbesondere eine Polyethylenterephthalat- oder Polycarbonatfolie.

In einer bevorzugten Ausführungsform des erfindungsgemäßen Verfahrens ist der inerte Träger mit einer zweiten Oberfläche, welche von der ersten Oberfläche abgewandt ist, auf einem zweiten inerten Träger aufgebracht, wobei der zweite Träger vorzugsweise ausgewählt ist aus der Gruppe bestehend aus Polymerfolien, Metallfolien, Papier und/oder Karton und wobei der inerte Träger farblos und transparent und der zweite Träger vorzugsweise weiß ist.

Ebenfalls Gegenstand der Erfindung ist ein Verfahren zur optischen Ermittlung des Aushärtungsfortschritts einer Zusammensetzung enthaltend mindestens eine NCO-reaktive Verbindung und mindestens ein Polyisocyanat, mit mindestens einem Indikatorfarbstoff und mindestens einer Protonenquelle, wobei der mindestens eine Indikatorfarbstoff zumindest ein Xanthen-Grundgerüst aufweist, dadurch gekennzeichnet, dass nach Inkontaktbringen des mindestens einen Indikatorfarbstoffs und der mindestens einen Protonenquelle mit der Zusammensetzung, die Farbe des mindestens einen Indikatorfarbstoffs mit einer Farbskala verglichen wird, um den Aushärtungsfortschritt zu ermitteln.

Ebenfalls Gegenstand der Erfindung ist die Verwendung eines Indikatorfarbstoffs mit Xanthen-Grundgerüst, vorzugsweise mit Fluoran-Grundgerüst, in Gegenwart von mindestens einer Protonenquelle zur optischen Anzeige des Aushärtungsfortschritts von Zusammensetzungen enthaltend mindestens eine NCO-reaktive Verbindung und mindestens ein Polyisocyanat, dadurch gekennzeichnet, dass der mindestens eine Indikatorfarbstoff nach Inkontaktbringen mit der ungehärteten Zusammensetzung eine erste Farbe aufweist und in der ausreichend ausgehärteten Zusammensetzung farblos ist, wobei die Zusammensetzung vorzugsweise ein Polyurethanlack bevorzugter ein Polyurethan-Refinish-Klarlack, noch bevorzugter ein Refinish-Klarlack auf Basis von Polyasparaginsäureesterderivaten ist.

Ebenfalls Gegenstand der Erfindung ist ein Kit-of-parts umfassend mindestens einen Indikatorfarbstoff, wobei der mindestens eine Indikatorfarbstoff zumindest ein Xanthen-Grundgerüst aufweist, mindestens eine Protonenquelle, eine Zusammensetzung enthaltend mindestens eine NCO-reaktive Verbindung und mindestens ein Polyisocyanat, wobei der mindestens eine Indikatorfarbstoff und die mindestens eine Protonenquelle vorzugsweise auf einer Oberfläche eines inerten Träger aufgebracht sind, vorzugsweise ist der inerte Träger mit einer zweiten Oberfläche, welche von der ersten Oberfläche abgewandt ist, auf einem zweiten inerten Träger aufgebracht, wobei der zweite Träger vorzugsweise weiß ist.

Ebenfalls Gegenstand der Erfindung ist ein Verfahren zur Erhöhung der Taktfrequenz zwischen einem Beschichtungsschritt und einem weiteren nachfolgenden Verarbeitungsschritt bei Objekten, die mit einer Zusammensetzung, welche mindestens eine NCO-reaktive Verbindung und mindestens ein Polyisocyanat enthält, beschichtet werden, dadurch gekennzeichnet, dass mindestens ein Indikatorfarbstoff, in Gegenwart von mindestens einer Protonenquelle, mit der Zusammensetzung in Kontakt gebracht wird um den Aushärtungsfortschritt der Beschichtung anzuzeigen, wobei der mindestens eine Indikatorfarbstoff zumindest ein Xanthen-Grundgerüst aufweist.

Das Wort *"ein"* im Zusammenhang mit zählbaren Größen ist im Rahmen der vorliegenden Erfindung nur dann als Zahlwort zu verstehen, wenn dies ausdrücklich gesagt wird (z. B. durch den Ausdruck *"genau ein"*)*.* Wenn im Folgenden beispielsweise von *"einem Polyisocyanat"* gesprochen wird, ist das Wort *"ein"* lediglich als unbestimmter Artikel und nicht als Zahlwort aufzufassen, es ist also damit auch eine Ausführungsform umfasst, in der zwei oder mehr Polyisocyanate vorhanden sind die sich beispielsweise strukturell unterscheiden.

Unter einer NCO-reaktiven Verbindung wird eine Verbindung verstanden, die mit Polyisocyanaten bei in der Beschichtungstechnologie üblichen Bedingungen zu Polyadditionsverbindungen, insbesondere Polyurethanen, reagieren kann. Als geeignete NCO-reaktive Verbindungen können alle dem Fachmann bekannten Verbindungen eingesetzt werden, welche eine mittlere OH-, SH- bzw. NH-Funktionalität von mindestens 1,5 aufweisen. Dies können beispielsweise niedermolekulare Diole (z.B. 1,2-Ethandiol, 1,3- bzw. 1,2-Propandiol, 1,4-Butandiol), Triole (z.B. Glycerin, Trimethylolpropan) und Tetraole (z.B. Pentaerythrit) sein, Polyaspartate, Polythiole aber auch Polyhydroxyverbindungen wie Polyetherpolyole, Polyesterpolyole, Polyurethanpolyole, Polysiloxanpolyole, Polycarbonatpolyole, , Polybutadienpolyole, Polyacrylatpolyole und/oder Polymethacrylatpolyole sowie deren Mischpolymerisate, im folgenden Polyacrylatpolyole genannt.

In einer bevorzugten Ausführungsform ist die mindestens eine NCO-reaktive Verbindung eine Polyhydroxyverbindung. Geeignete Polyhydroxyverbindungen weisen bevorzugt massenmittlere Molekulargewichte Mw > 500 Dalton, gemessen mittels Gelpermeationschromatographie (GPC) nach DIN 55672-1:2016-03 in Tetrahydrofuran bei 25 °C gegen einen Polystyrolstandard, besonders bevorzugt zwischen 800 und 100.000 Dalton, insbesondere zwischen 1.000 und 50.000 Dalton auf. Geeignete Polyhydroxyverbindungen weisen bevorzugt eine OH-Zahl von 30 bis 400 mg KOH/g, insbesondere zwischen 100 und 300 KOH/g, auf. Die Hydroxylzahl (OH-Zahl) gibt an, wie viel mg Kaliumhydroxid der Essigsäure-Menge äquivalent sind, die von 1 g Substanz bei der Acetylierung gebunden wird. Zur Bestimmung wird eine Probe der Polyhydroxyverbindung mit Essigsäureanhydrid-Pyridin erhitzt und die entstehende Säure mit Kaliumhydroxidlösung titriert (DIN EN ISO 4629-2:2016). Die Glasübergangstemperaturen, gemessen mit Hilfe von DSC-Messungen nach DIN-EN-ISO 11357-2:2014, der Polyhydroxyverbindungen liegen bevorzugt zwischen -150 und 100 °C, besonders bevorzugt zwischen -120°C und 80°C.

Geeignete Polyetherpolyole sind in an sich bekannter Weise durch Alkoxylierung von geeigneten Starter-Molekülen unter Basenkatalyse oder Einsatz von Doppelmetallcyanidverbindungen (DMC-Verbindungen) zugänglich. Geeignete Starter-Moleküle für die Herstellung von Polyetherpolyolen sind beispielsweise einfache, niedermolekulare Polyole, Wasser, organische Polyamine mit mindestens zwei N-H-Bindungen oder beliebige Gemische derartiger Starter-Moleküle.

Bevorzugte Starter-Moleküle zur Herstellung von Polyetherpolyolen durch Alkoxylierung, insbesondere nach dem DMC-Verfahren, sind insbesondere einfache Polyole wie Ethylenglykol, Propylenglykol-1,3 und Butandiol-1,4, Hexandiol-1,6, Neopentylglykol, 2-Ethylhexandiol-1,3, Glyzerin, Trimethylolpropan, Pentaerythrit sowie niedermolekulare, Hydroxylgruppen aufweisende Ester derartiger Polyole mit Dicarbonsäuren der nachstehend beispielhaft genannten Art oder niedermolekulare Ethoxylierungs- oder Propoxylierungsprodukte derartiger einfacher Polyole oder beliebige Gemische derartiger modifizierter oder nicht modifizierter Alkohole. Für die Alkoxylierung geeignete Alkylenoxide sind insbesondere Ethylenoxid und/oder Propylenoxid, die in beliebiger Reihenfolge oder auch im Gemisch bei der Alkoxylierung eingesetzt werden können.

In einer bevorzugten Ausführungsform ist die mindestens eine NCO-reaktive Verbindung einPolyasparaginsäureester gemäß der allgemeinen Formel (I), 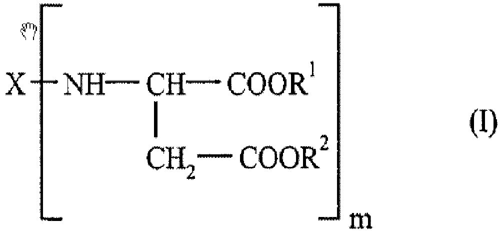
in welcher X für einen m-wertigen, gegebenenfalls ein oder mehrere Heteroatome enthaltenden organischen Rest steht, wie er durch Entfernung der primären Aminogruppe bzw. -gruppen aus einem entsprechenden Mono- oder Polyamin des Molekulargewichtsbereichs 60 bis 6000, welches (cyclo)aliphatisch bzw. araliphatisch gebundene primäre Aminogruppen aufweist, erhalten werden kann, und der weitere, gegenüber lsocyanatgruppen reaktive und / oder bei Temperaturen bis 100 °C inerte funktionelle Gruppen enthalten kann,
R1 und R2 für gleiche oder verschiedene organische Reste, vorzugsweise für gleiche oder verschiedene Alkylreste mit je 1 bis 18 Kohlenstoffatomen und ganz besonders bevorzugt für gleiche oder verschiedene Alkylreste mit je 1 bis 8 Kohlenstoffatomen stehen und
m für eine ganze Zahl > 1, bevorzugt ≥ 2 und besonders bevorzugt = 2 steht.

Polyasparingsäureester werden bevorzugt aus Aminen durch Addition an aktivierte C-C-Doppelbindungen nach an sich bekannten und beschriebenen Verfahren hergestellt. Beispiele für bevorzugt einsetzbare Verbindungen sind Ethylendiamin, 1,2-Diaminopropan, 1,4-Diaminobutan, 2,5-Diamino-2,5-dimethylhexan, 1,5-Diamino-2-methylpentan (Dytek®A, Fa DuPont), 1,6-Diaminohexan, 2,2,4- und/oder 2,4,4-Trimethyl-1,6-diaminohexan, 1, 11-Diaminoundecan, 1, 12-Diaminododecan oder Triaminononan.

Ebenfalls einsetzbar sind höhermolekulare Polyetherpolyamine mit aliphatisch gebundenen, primären Aminogruppen, wie sie beispielsweise unter der Bezeichnung Jeffamin® von der Firma Huntsman vertrieben werden. Beispiele für besonders bevorzugt einsetzbare Diamine sind 1-Amino-3,3,5-trimethyl-5-aminomethylcyclohexan (IPDA), 2,4- und/oder 2,6-Hexahydrotoluylendiamin (H 6TDA), lsopropyl-2,4-diaminocyclohexan und/oder lsopropyl-2,6-diaminocyclohexan, 1,3-Bis-(aminomethyl)-cyclohexan, 2,4'- und/oder 4,4'-Diaminodicyclohexylmethan, 3,3'-Dimethyl-4,4'-diamino-dicyclohexylmethan (Laromin® C 260, Fa. BASF SE), die Isomeren, eine Methylgruppe als Kernsubstituenten aufweisenden Diaminodicyclohexylmethane (= C-Monomethyl-diaminodicyclohexylmethane), 3(4)-Aminomethyl-1-methylcyclohexylamin (AMCA) sowie araliphatische Diamine, wie z.B. 1,3-Bis-(aminomethyl)benzol. Als Reaktionspartner für die aminischen Komponenten zur Herstellung der Polyaspartate werden bevorzugt Malein- oder Fumarsäureester eingesezetzt. Beispiele für geeignete Verbindungen sind Maleinsäuredimethylester, Maleinsäurediethylester, Maleinsäuredi-n-propylester oder Maleinsäureisopropylester, Maleinsäuredi-n-butylester, Maleinsäuredi-2-ethyl-hexylester oder die entsprechenden Fumarsäureester sowie Mischungen der vorgenannten Verbindungen. Insbesondere geeignete Polyasparaginsäureester werden unter der Bezeichnung Desmophen® NH von Covestro AG, Deutschland vertrieben. #

Weiterhin geeignet zur Herstellung von Polyasparaginsäureestern sind aminfunktionelle Polymere, die durch teilweise Umsetzung der vorgenannten Diamine mit zur Polyaddition geeigneten difunktionellen Verbindungen wie beispielsweise Diisocyanaten oder Diacrylaten hergestellt werden können. Es ist auch möglich, die vorgenannten Polyasparginsäurester durch teilweise Umsetzung mit Diisocyanaten im Molekulargewicht zu vergrößern. Geeignete Diisocyanate sind 1,4-Butandiisocyanat, 1,5-Pentandiisocyanat (Pentamethylendiisocyanat, PDI), 1,6-Hexandiisocyanat (Hexamethylendiisocyanat, HDI), 4,4'-Methylenbis(cyclohexylisocyanat) (H12MDI), 3,5,5-Trimethyl-1-isocyanato-3-isocyanatomethylcyclohexan (Isophorondiisocyanat, IPDI), 1,3- sowie 1,4-Bis(isocyanatomethyl)cyclohexan (H6XDI), 1,5 Naphthalindiisocyanat, Diisocyanatodiphenylmethan (2,2'-, 2,4'- und 4,4'-MDI oder Mischungen aus mindestens zwei daraus), Diisocyanatomethylbenzol (2,4- und 2,6-Toluylendiisocyanat, TDI) und technische Gemische der beiden Isomeren sowie 1,3 und/oder 1,4-Bis(isocyanatomethyl)benzol (XDI), 3,3'-Dimethyl-4,4'-biphenyldiisocyanat (TODI), 1,4-Paraphenylendiisocyanat (PPDI), 1,3-Tetramethylxylylendiisocyanate (TMXDI) sowie Cyclohexyldiisocyanat (CHDI) und die aus vorgenannten, einzeln oder in Mischung erhältlichen, höhermolekularen, aber difunktionellen Oligomeren mit Uretdion-, Allophanat-, Urethan- sowie Carbodiimid/Uretonimin-Struktuereinheiten. Bevorzugt werden aliphatische und cycloaliphatische Diisocyanate, insbesondere HDI, PDI, H12MDI und IPDI eingesetzt.

Geeignete Polyesterpolyole sind beispielsweise in EP-A-0 994 1 17 und EP-A-1 273 640 beschrieben. Polyesterpolyole können in bekannter Weise durch Polykondensation von niedermolekularen Polycarbonsäurederivaten, wie beispielsweise Bernsteinsäure, Adipinsäure, Korksäure, Azelainsäure, Sebacinsäure, Dodekandisäure, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, Dimerfettsäure, Trimerfettsäure, Phthalsäure, Phthalsäureanhydrid, Isophthalsäure, Terephthalsäure, Zitronensäure oder Trimellithsäure, mit niedermolekularen Polyolen, wie beispielsweise Ethylenglykol, Diethylenglykol, Neopentylglykol, Hexandiol, Butandiol, Propylenglykol, Glycerin, Trimethylolpropan, 1,4-Hydroxymethylcyclohexan, 2-Methyl-1,3-propandiol, Butantriol-1,2,4, Triethylenglykol, Tetraethylenglykol, Poly-ethylenglykol, Dipropylenglykol, Polypropylenglykol, Dibutylenglykol und Polybutylenglykol, oder durch Ring-öffnende Polymerisation cyclischer Carbonsäureester, wie ε-Caprolacton, hergestellt werden. Darüber hinaus lassen sich auch Hydroxycarbonsäurederivate, wie beispielsweise Milchsäure, Zimtsäure oder ω-Hydroxycapronsäure zu Polyesterpolyolen polykondensieren. Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigten Fettsäure-enthaltenden Fettgemisches mit einem oder mehreren Alkoholen mit 1 bis 12 C-Atomen und durch anschließende partielle Umesterung der Triglycerid-Derivate zu Alkylesterpolyolen mit 1 bis 12 C-Atomen im Alkylrest hergestellt werden.

Geeignete Polyurethanpolyole werden vorzugsweise durch Umsetzung von Polyesterpolyol-Präpolymeren mit geeigneten Di- oder Polyisocyanaten hergestellt und sind beispielsweise in EP-A-1 273 640 beschrieben.

Geeignete Polysiloxanpolyole sind beispielsweise in der WO-A-01/09260 beschrieben, wobei die dort angeführten Polysiloxanpolyole bevorzugt in Kombination mit weiteren Polyhydroxyverbindungen, insbesondere solchen mit höheren Glasübergangstemperaturen, zum Einsatz kommen können.

In einer bevorzugten Auführungsform ist die mindestens eine NCO-reaktive Verbindung ein Polyacrylatpolyol. Geeignete Polyacrylatpolyole sind in der Regel Copolymerisate und weisen vorzugsweise massenmittlere Molekulargewichte Mw zwischen 1.000 und 20.000 Dalton, insbesondere zwischen 1.500 und 10.000 Dalton auf, jeweils gemessen mittels Gelpermeationschromatographie (GPC) nach DIN 55672-1:2016-03 in Tetrahydrofuran bei 25 °C gegen einen Polystyrolstandard. Die Glasübergangstemperatur der Copolymerisate liegt vorzugsweise zwischen -100 und 100 °C, insbesondere zwischen -50 und 80 °C (gemessen mittels DSC-Messungen nach DIN-EN-ISO 11357-2:2014). Geeignete Polyacrylatpolyole weisen bevorzugt eine OH-Zahl von 60 bis 250 mg KOH/g, insbesondere zwischen 70 und 200 mg KOH/g, sowie eine Säurezahl zwischen 0 und 30 mg KOH/g, auf. Die Säurezahl gibt hierbei die Anzahl der mg Kaliumhydroxid an, die zur Neutralisation von 1 g der jeweiligen Verbindung verbraucht wird (DIN EN ISO 2114:2000).

Die Herstellung geeigneter Polyacrylatpolyole ist dem Fachmann bekannt. Sie werden durch radikalische Polymerisation von Hydroxylgruppen aufweisenden, olefinisch ungesättigten Monomeren oder durch radikalische Copolymiersation von Hydroxylgruppen aufweisenden, olefinisch ungesättigten Monomeren mit gegebenenfalls anderen olefinisch ungesättigten Monomeren, wie z.B. Ethylacrylat, Ethylmethacrylat, Propylacrylat, Propylmethacrylat, Isopropylacrylat, Isopropylmethacrylat, Butylacrylat, Butylmethacrylat, Isobutylacrylat, Isobutylmethacrylat, tert-Butylacrylat, tert-Butylmethacrylat, Amylacrylat, Amylmethacrylat, Hexylacrylat, Hexylmethacrylat, Ethylhexylacrylat, Ethylhexylmethacrylat, 3,3,5-Trimethylhexylacrylat, 3,3,5-Trimethylhexylmethacrylat, Stearylacrylat, Stearylmethacrylat, Laurylacrylat oder Laurylmethacrylat, Cycloalkylacrylate und/oder Cycloalkylmethacrylate, wie Cyclopentylacrylat, Cyclopentylmethacrylat, Isobornylacrylat, Isobornylmethacrylat oder insbesondere Cyclohexylacrylat und/oder Cyclohexylmethacrylat. erhalten. Geeignete Hydroxylgruppen aufweisende, olefinisch ungesättigte Monomere sind insbesondere 2-Hydroxyethylacrylat, 2-Hydroxyethylmethacrylat, 2-Hydroxypropylacrylat, 2-Hydroxypropylmethacrylat, 3-Hydroxypropylacrylat, 3-Hydroxypropylmethacrylat, 3-Hydroxybutylacrylat, 3-Hydroxybutylmethacrylat sowie insbesondere 4-Hydroxybutylacrylat und/oder 4-Hydroxybutylmethacrylat.

Als weitere Monomerbausteine für die Polyacrylatpolyole können vinylaromatische Kohlenwasserstoffe, wie Vinyltoluol, alpha-Methylstyrol oder insbesondere Styrol, Amide oder Nitrile der Acryl- oder Methacrylsäure, Vinylester oder Vinylether, sowie in untergeordneten Mengen insbesondere Acryl- und/oder Methacrylsäure eingesetzt werden.

In einer weiteren Ausführungsform liegt die mindestens eine NCO-reaktive Verbindung als wässrige Dispersion vor. Beispiele sind die zuvor genannten Polyester- und/oder Polyacrylatpolyole, die durch Einbau von emulgierend wirkenden Gruppen und/oder Verwendung von Emulgatoren wasserdispergierbar gemacht wurden. Bei den Polyacrylatpolyolen sind sowohl Emulsionspolymerisate, bei den die Polymerisation in Micellen in wässriger Phase abläuft, als auch sekundäre Disperisonen, bei denen zunächst ein Polymer in Substanz oder wenig organischem Lösemittel hergestellt und anschließend in Wasser dispergiert wird, geeignet. Wässrige Polyurethanpolyol-Dispersionen sind ebenfalls geeignet.

Ebenfalls geeignet sind hydroxyl-terminierte Polycarbonate, die durch Umsetzung von Diolen oder auch Lacton-modifizierten Diolen oder auch Bisphenolen, wie zum Beispiel Bisphenol A, mit Phosgen oder Kohlensäurediestern wie Diphenylcarbonat oder Dimethylcarbonat zugänglich sind. Beispielhaft seine genannt die polymeren Carbonate des 1,6-Hexandiols, 1,5-Pentandiols und/oder des 1,4-Butandiols eines mittleren Molekulargewichts von ≥ 500 g/mol bis ≤ 8000 g/mol, sowie die Carbonate von Umsetzungsprodukten des 1,6-Hexandiols mit ε-Caprolacton im molaren Verhältnis von ≥ 0,1 bis ≤ 1. Bevorzugt sind vorgenannte Polycarbonatdiole eines mittleren Molekulargewichts von ≥ 800 g/mol bis ≤ 3000 g/mol auf Basis 1,6-Hexandiol, und/oder Carbonate von Umsetzungsprodukten des 1,6-Hexandiols mit ε-Caprolacton im molaren Verhältnis von ≥ 0,33 bis ≤ 1. Hydroxyl-terminierte Polycarbonate sind beispieslweise erhältlich unter der Bezeichnung Desmophen® C von Covestro AG, DE oder unter der Bezeichnung Eternacoll® von Ube Industries, Ltd., JP.
Weiterhin geeignet sind hydroxyl-terminierte Polybutadienpolymere wie sie beispielsweise von der Fa. Cray Valley, FR unter der Bezeichnung poly-bd® angeboten werden.

Die mindestens eine NCO-reaktive Verbindung ist vorzugsweise ausgewählt aus der Gruppe bestehend aus Polyasparaginsäureestern, Polyacrylatpolyolen, Polyesterpolyolen und / oder Mischungen aus mindestens zwei hieraus, insbesondere Polyacrylatpolyole, Polyasparaginsäureester und / oder Mischungen hieraus.

Als Polyisocyanat eigenen sich alle dem Fachmann für die Herstellung von Polyisocyanat-Polyadditionsprodukten, insbesondere Polyurethanen, als geeignet bekannte Polyisocyanate, insbesondere die Gruppe der organischen aliphatischen, cycloaliphatischen, araliphatischen und/oder aromatischen Polyisocyanate mit mindestens zwei Isocyanatgruppen pro Molekül sowie Gemische davon. Beispiele für derartige Polyisocyanate sind Di- oder Triisocyanate, wie z.B. 1,4-Butandiisocyanat, 1,5-Pentandiisocyanat (Pentamethylendiisocyanat, PDI), 1,6-Hexandiisocyanat (Hexamethylendiisocyanat, HDI), 4-Isocyanatomethyl-1,8-octandiisocyanat (Triisocyanatononan, TIN), 4,4'-Methylenbis(cyclohexylisocyanat) (H12MDI), 3,5,5-Trimethyl-1-isocyanato-3-isocyanatomethylcyclohexan (Isophorondiisocyanat, IPDI), 1,3- sowie 1,4-Bis(isocyanatomethyl)cyclohexan (H6XDI), 1,5 Naphthalindiisocyanat, Diisocyanatodiphenylmethan (2,2'-, 2,4'- und 4,4'-MDI oder Mischungen daraus), Diisocyanatomethylbenzol (2,4- und 2,6-Toluylendiisocyanat, TDI) und technische Gemische der beiden Isomeren sowie 1,3 und/oder 1,4-Bis(isocyanatomethyl)benzol (XDI), 3,3'-Dimethyl-4,4'-biphenyldiisocyanat (TODI), 1,4-Paraphenylendiisocyanat (PPDI), 1,3-Tetramethylxylylendiisocyanate (TMXDI) sowie Cyclohexyldiisocyanat (CHDI) und die aus vorgenannten, einzeln oder in Mischung erhältlichen, höhermolekularen Oligomeren mit Biuret-, Uretdion-, Isocyanurat-, Iminooxadiazindion-, Allophanat-, Urethan- sowie Carbodiimid/Uretonimin-Struktuereinheiten. Bevorzugt werden Polyisocyanate auf Basis aliphatischer und cycloaliphatischer Diisocyanate eingesetzt.

In einer bevorzugten Ausführungsform ist das mindestens eine Polyisocyanat ein aliphatisches und/oder cycloaliphatisches Polyisocyanat. In einer anderen bevorzugten Ausführungsform ist das mindestens eine Polyisocyanat ein Derivat des Hexamethylendiisocyanats und/oder des Pentamethylendiisocyanats, insbesondere ein Hexamethylendiisocyanat-Trimer und/oder ein Pentamethylendiisocyanat-Trimer. In einer anderen bevorzugten Ausführungsform kann das mindestens eine Polyisocyanate eine oder mehrere hydrophilierend wirkende Gruppen wie beispielsweise Polyethyenloxideinheiten oder neutralisierte Sulfonatgruppen enthalten.

Vorzugsweise beträgt das Verhältnis von Polyisocyanaten zu NCO-reaktiven Verbindungen bezogen auf die Stoffmengen der Polyisocyanatgruppen zu den NCO-reaktiven Gruppen von 0,5 zu 1,0 bis 3,0 zu 1,0. Besonders bevorzugt ist ein Verhältnis von 0,9 zu 1,0 bis 1,5 zu 1,0. Ganz besonders bevorzugt ist ein Verhältnis von 1,05 zu 1,0 bis 1,25 zu 1,0.

In einer bevorzugten Ausführungsform umfasst die Zusammensetzung des erfindungsgemäßen Indikatorsystems mindestens eine NCO-reaktive Verbindung ausgewählt aus der Gruppe bestehend aus Polyasparaginsäureestern, Polyacrylatpolyolen, Polyesterpolyolen und / oder Mischungen aus mindestens zwei hieraus und mindestens ein Polyisocyanat, wobei das Polyisocyanat ein Derivat des Hexamethylendiisocyanats und/oder des Pentamethylendiisocyanats ist. In einer anderen bevorzugten Ausführungsform enthält die Zusammensetzung als NCO-reaktive Verbindung Polyacrylatpolyol und als Polyisocyanat ein Derivat des Hexamethylendiisocyanats und/oder des Pentamethylendiisocyanats. In einer anderen bevorzugten Ausführungsform enthält die Zusammensetzung als NCO-reaktive Verbindung Polyacrylatpolyol und als Polyisocyanat ein Hexamethylendiisocyanat-Trimer und / oder ein Pentamethylendiisocyanat-Trimer. In einer anderen bevorzugten Ausführungsform enthält die Zusammensetzung als NCO-reaktive Verbindung Polyasparaginsäureester und als Polyisocyanat ein Derivat des Hexamethylendiisocyanats und/oder des Pentamethylendiisocyanats. In einer anderen bevorzugten Ausführungsform enthält die Zusammensetzung als NCO-reaktive Verbindung Polyasparaginsäureestern und als Polyisocyanat ein Hexamethylendiisocyanat-Trimer und / oder ein Pentamethylendiisocyanat-Trimer. Die Zusammensetzung ist vorzugsweise keine aufschäumbare oder schaumbildende Zusammensetzung. Die Zusammensetzung ist vorzugsweise nicht radikalisch polymerisierbar, insbesondere nicht photo-polymerisierbar, d.h. die Zusammensetzung härtet nicht durch radikalische Prozesse aus, insbesondere nicht durch radikalische Polymerisationsprozesse die durch aktinische Strahlung initiiert werden. Die Zusammensetzung kann beispielsweise ein Lack oder eine Beschichtung sein. Die Zusammensetzung ist vorzugsweise eine zwei Komponenten Zusammensetzung (2 K Zusammensetzung), das heißt die Komponenten werden zunächst getrennt hergestellt und gelagert und erst kurz vor oder während der Applikation miteinander vermischt. Nach dem Vermischen beginnen die Komponenten miteinander zu reagieren. Die Verarbeitungszeit bei Zimmertemperatur, auch als Topfzeit bezeichnet, liegt dann je nach Auswahl der Komponenten im Bereich von 1 Minute bis zu 24 Stunden, meist im Bereich von 10 Minuten bis 8 Stunden.

Die Zusammensetzung des erfindungsgemäßen Indikatorsystems ist vorzugsweise ein Polyurethan- und/oder Polyharnstofflack, bevorzugter ein Polyurethan- und/oder Polyharnstoff-Refinish-Klarlack, noch bevorzugter ein Refinish-Klarlack auf Basis von Polyasparaginsäureesterderivaten.

Weiterhin kann die Zusammensetzung für die Beschichtungstechnologie mit Polyisocyanat-Polyadditionsverbindungen insbesondere für Polyurethanverbindungen typische Zusatzstoffe enthalten. Beispiele sind Katalysatoren/Aktivatoren wie zum Beispiel Titan-, Zirkonium-, Bismut-, Zinn- und/oder eisenhaltigen Katalysatoren, wie sie beispielsweise in WO 2005/058996 beschrieben sind. Möglich ist auch eine Zugabe von Aminen oder Amidinen.
Beispiele weiterer geeigneter Zusatzmittel sind insbesondere Lichtschutzmittel wie UV-Absorber und sterisch gehinderte Amine (HALS), weiterhin Stabilisatoren, Füllstoffe sowie Antiabsetzmittel, Entschäumungs-, Antikrater- und/oder Netzmittel, Verlaufsmittel, filmbildende Hilfsmittel, Reaktivverdünner, Lösemittel, Substanzen zur Rheologiesteuerung, Slipadditive und/oder Komponenten, die das Anschmutzen verhindern und/oder die Reinigungsfähigkeit der ausgehärteten Beschichtungen verbessern, ferner Mattierungsmittel.
Der Einsatz von Lichtschutzmitteln insbesondere von UV-Absorber wie beispielsweise substituierten Benztriazolen, S-Phenyltriazinen oder Oxalaniliden sowie sterisch gehinderten Aminen insbesondere mit 2,2,6,6-Tetramethyl-piperidyl-Strukturen - als HALS bezeichnet - ist beispielhaft beschrieben in A. Valet, Lichtschutzmittel für Lacke, Vincentz Verlag, Hannover, 1996.

Stabilisatoren wie beispielsweise Radikalfänger und andere Polymerisationsinhibitoren wie sterisch gehinderte Phenole stabilisieren Lackkomponenten während der Lagerung und sollen Verfärbungen während der Aushärtung verhindern. Weiterhin kommen Wasserfänger wie Triethylorthoformiat oder Hydrolyseschutzmittel wie Carbodiimide in Betracht.

Die Zusammensetzung kann weiterhin Pigmente, Farbstoffe und/oder Füllstoffe enthalten. Die dafür eingesetzten Pigmente auch Metallic- oder andere Effektpigmente, Farbstoffe und/oder Füllstoffe sind dem Fachmann bekannt.

Als Füllstoffe sind solche Verbindungen bevorzugt, die die Optik der Beschichtung nicht negativ beeinflussen. Beispiele sind Nanopartikel auf der Basis von Siliziumdioxid, Aluminiumoxid oder Zirkoniumoxid; ergänzend wird noch auf das Römpp Lexikon »Lacke und Druckfarben« Georg Thieme Verlag, Stuttgart, 1998, Seiten 250 bis 252, verwiesen.

Sind Füllstoffe, Mattierungsmittel oder Pigmente enthalten, kann der Zusatz von Antiabsetzmitteln sinnvoll sein, um eine Trennung der Bestandteile bei Lagerung zu verhindern.

Netz- und Verlaufsmittel verbessern die Oberflächenbenetzung und/oder den Verlauf von Lacken. Beispiele sind Fluortenside, Silikontenside sowie spezielle Polyacrylate. Rheologiesteuernde Additive sind wichtig um die Eigenschaften des Zwei-Komponenten-Systems bei der Applikation und in der Verlaufsphase auf dem Substrat zu steuern und sind beispielsweise aus den Patentschriften WO 94/22968, EP-A-0 276 501 , EP-A-0 249 201 oder WO 97/12945 bekannt; vernetzte polymere Mikroteilchen, wie sie beispielsweise in der EP-A-0 008 127 offenbart sind; anorganische Schichtsilikate wie Aluminium-Magnesium-Silikate, Natrium-Magnesium und Natrium-Magnesium-Fluor-Lithium-Schichtsilikate des Montmorillonit-Typs; Kieselsäuren wie Aerosil®; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäure-anhydrid-Copolymere und ihre Derivate oder hydrophob modifizierte ethoxylierte Urethane, Harnstoffe oder Polyacrylate.

Die Zusammensetzung kann weiterhin Lösungsmittel enthalten. Das Lösungsmittel kann ein organisches Lösungsmittel oder ein Gemisch organischer Lösungsmittel sein oder Wasser oder ein Gemisch aus organischen Lösungsmittel(n) und Wasser. Geeignete Lösungsmittel sind in dem Fachmann bekannter Art und Weise abgestimmt auf die Zusammensetzung sowie das Applikationsverfahren einzusetzen. Lösemittel sollen die eingesetzten Komponenten lösen und deren Vermischung fördern sowie Unverträglichkeiten vermeiden. Weiterhin sollen sie während der Applikation und der Härtung die Beschichtung auf die ablaufende Vernetzungsreaktion abgestimmt verlassen, so dass eine lösemittelfreie Beschichtung mit möglichst guter Optik und ohne Fehlstellen wie Kocher oder Nadelstiche entsteht. Insbesondere kommen Lösemittel in Betracht, die in der Zwei Komponenten Technologie zur Anwendung kommen. Beispiele für organische Lösungsmittel sind Ketone wie Aceton, Methylethylketon oder Hexanon, Ester wie Ethylacetat, Butylacetat, Methoxyproylacetat, substituierte Glykole und andere Ether, Aromaten wie Xylol oder Solventnaphtha wie z.B. der Fa. Exxon-Chemie sowie Gemische der genannten Lösemittel. Liegt der NCO-reaktive Teil der Zusammensetzung als wässrige Dispersion vor, eignet sich auch Wasser als Löse- bzw. Verdünnungsmittel.

Die Herstellung der Zusammensetzung erfolgt nach in der Technologie der Lacke und Druckfarben an sich bekannten Methoden. Isocyanatreaktive und isocyanathaltige Komponenten werden zunächst getrennt durch Vermischen der jeweiligen Inhaltsstoffe hergestellt. Ein Vermischen erfolgt erst unmittelbar vor oder während der Applikation. Erfolgt das Vermischen vor der Applikation ist zu beachten, dass die Reaktion der Bestandteile nach dem Vermischen bereits startet. Je nach Auswahl der Komponenten und der Zusatzstoffe wird die Reaktion unterschiedlich schnell ablaufen, so dass eine Topfzeit resultiert, innerhalb derer die Zusammensetzung appliziert werden muss. Die Auswahl der Komponenten und die Bestimmung der Topfzeit erfolgen nach dem Fachmann bekannten Methoden.

Beispiele für entsprechende Zusammensetzungen sind kommerziell verfügbare 2K PU Lacke auch als DD-Lacke bekannt. Diese werden für Anwendungen insbesondere als Füller, Klarlacke oder Decklacke wie beispielsweise für die Autoreparaturlackierung, die Großfahrzeuglackierung, Kunststofflackierung, Autolackierung, allgemeine Industrielackierung, die Möbellackierung, die Fussbodenlackierung oder für die Lackierung im Baugewerbe angeboten. Autoreparaturklarlacke werden beispielsweise angeboten unter der Bezeichnung Permasolid® Klarlack und Härter von der Fa. Spies-Hecker GmbH, Köln; weiterhin unter der Bezeichnung Glasurit® Klarlack und Härter von der Fa. BASF Coatings GmbH, Münster; weiterhin unter den Bezeichnungen Deltron® und Nexa Autocolor® Klarlack und Härter von der Fa. PPG Deutschland Sales & Services GmbH, Hilden; weiterhin unter der Bezeichnung Sikkens Autoclear® von der Fa. Akzo Nobel N.V., Amsterdam.

Dem Fachmann ist klar, dass sich nur solche Zusammensetzungen für das erfindungsgemäße Indikatorsystems eignen, die farblich nicht mit der Farbänderung des Indikatorfarbstoffs bei der Härtung interferieren. Das sind insbesondere Klarlacke sowie nur schwach gefärbte oder lasierende Lacke, weiterhin hell gefärbte Decklacke, insbesondere weiße Decklacke. Besonders bevorzugt sind nicht pigmentierte Klarlacke. Unter interferieren wird in diesem Zusammenhang verstanden, dass die Farbänderung des Indikatorfarbstoffs für das menschliche Auge durch andere Pigmente, Farbstoffe oder Füllstoffe nicht mehr sichtbar ist.

Unter dem Begriff "Protonenquelle" wird im Sinne der vorliegenden Erfindung eine Verbindung verstanden, die durch ihre saure Wirkung basische Komponenten in der Zusammensetzung anteilig oder vollständig neutralisieren kann.

In einer bevorzugten Ausführungsform ist die mindestens eine Protonenquelle eine Brønsted-Säure. Unter dem Begriff "Brønsted-Säure" wird im Sinne der vorliegenden Erfindung eine Verbindung verstanden, die durch zur Protonenabgabe im Sinne einer Säure-Base-Reaktion befähigt ist. Die Brønsted-Säure ist vorzugsweise ausgewählt aus der Gruppe der organischen Säuren und insbesondere ausgewählt aus der Gruppe bestehend aus nichtpolymeren Carbonsäuren inklusive Hydroxycarbonsäure sowie organisch substituierter Phosphor- und Sulfonsäuren.

Als Monocarbonsäuren eigen sich beispielsweise Säuren ausgewählt aus der Gruppe bestehend aus Benzoesäure, Cyclohexancarbonsäure, 2-Ethyl¬hexan¬säure, Capronsäure, Caprylsäure, Caprinsäure, Laurinsäure, und natürlicher und synthetischer Fettsäuren, insbesondere Laurin-, Myristin-, Palmitin-, Margarin-, Stearin-, Behen-, Cerotin-, Palmitolein, Öl-, Icosen-, Linol-, Linolen- und Arachidonsäure.

Als Dicarbonsäuren eignen sich solche mit einem Molekulargewicht im Bereich von 104 bis 600 g/mol. Bevorzugte Dicarbonsäuren sind ausgewählt aus der Gruppe bestehend aus Phthalsäure, Isophthalsäure, Tetra¬hydrophthalsäure, Hexahydrophthalsäure, Cyclohexandicarbonsäure, Maleinsäure, Fumarsäure, Malonsäure, Bernsteinsäure, Glutarsäure, Adipin¬säure, Pimelinsäure, Korksäure, Sebacinsäure, Dodecan¬disäure, hydrierte Dimere von Fettsäuren.

Weiterhin geeignet sind alpha-, beta- oder gamma-Hydroxycarbonsäuren wie beipielsweise Äpfelsäure, Citronensäure, 2-Hydroxy-4-methylmercaptobuttersäure, Glycolsäure, Isocitronensäure, Mandelsäure, Milchsäure, Tartronsäure, Weinsäure, β-Hydroxybuttersäure, Mevalonsäure, Gallussäure, 4-Hydroxybutansäure, 4-Hydroxybenzoesäure.

Ebenfalls geeignet sind oligomere oder polymere Verbindungen, die saure Gruppen enthalten, wie Polyhydroxybuttersäure, saure Polyester oder Polymerisate von Vinylverbindungen, in die saure Gruppen zum Beispiel durch Monomere wie Acrylsäure oder Methacrylsäure einpolymerisiert wurden.

Ebenfalls geeignet sind Sulfonsäuren. Die Sulfonsäuren sind insbesondere ausgewählt aus der Gruppe der Alkansulfonsäuren wie Dodecylsulfonsäure oder der Arensulfonsäuren wie 4-Dodecylbenzolsulfonsäure und 4-Toluolsulfonsäure.

Ebenfalls geeignet sind Phosphorsäuren. Geeignete Phosphorsäuren sind insbesondere teilweise veresterte Phosphorsäuren insbesondere Mono- und/oder Di-Alkylester wie Dibutylphosphat oder Ethylhexylphosphat.

Sofern zugänglich sind bei chiralen Säuren sowohl die jeweiligen Enantiomere als auch racemische Formen geeignet.

Besonders bevorzugt sind solche Säuren, die bei 23 °C flüssig und daher geeignet sind, einen Film zu bilden und einen pkₛ Wert zwischen 1 und 10, insbesondere zwischen 3 und 8 aufweisen. Der pkₛ Wert kann nach Verfahren bestimmt werden, die dem Fachmann bekannt sind. Dem Fachmann ist dabei klar, dass Parameter wie Löslichkeit und Lösemittel einen Einfluss auf den pks Wert haben.

Unter dem Begriff "Indikatorfarbstoff" wird im Sinne der vorliegenden Erfindung ein Farbstoff verstanden, der bei Kontakt mit der ungehärteten Zusammensetzung des erfindungsgemäßen Indikatorsystems eine erste Farbe aufweist und in der ausgehärteten Zusammensetzung farblos ist. Vorliegend wird unter dem Begriff "Farbe" oder "Farbton" das verstanden, was für das menschliche Auge wahrgenommen wird nach Absorption eines oder mehrerer Teilbereiche in dem für das menschliche Auge sichtbaren Bereich des elektromagnetischen Spektrums von 380 bis 780 nm. Der Farbton kann beispielsweise Rot, Gelb, Grün und Blau sein, aber auch eine Variation davon bezüglich der Farbsättigung und Helligkeit. Der Übergang von der ersten Farbe nach farblos, d.h. die Farbänderung, kann stufenweise oder schlagartig erfolgen. Vorzugsweise erfolgt die Farbänderung stufenweise, d.h. dass die Farbsättigung und/oder Helligkeit des Farbtons des Farbstoffs abnimmt bis der Farbstoff farblos ist. Bei einer schlagartigen Farbänderung (Farbumschlag) nimmt die Farbsättigung und/oder Helligkeit des Farbstoffs so schnell ab, dass dies vom menschlichen Auge nicht mehr wahrgenommen wird. Vorliegend bedeutet farblos, dass keine elektromagnetische Strahlung im Bereich von von 380 bis 780 nm absorbiert wird. Das menschliche Auge kann zwischen dem Farbton der ausgehärteten Zusammensetzung ohne Indikatorfarbstoff und der ausgehärteten Zusammensetzung mit Indikatorfarbstoff nicht unterscheiden. Insbesondere bedeutet das, dass der Unterschied deltaE, farbmetrisch nach dem CIE-L*a*b-System (DIN EN ISO 11664-4:2011), kleiner als 2,5, bevorzugt kleiner als 1,0 ist.

Wenn mehr als ein Indikatorfarbstoff verwendet wird ist die erste Farbe die beim Kontakt mit der Zusammensetzung auftritt, die Farbe die durch die Mischung der Farben der einzelnen verwendeten Indikatorfarbstoffe nach Kontakt mit der Zusammensetzung entsteht. Die unterschiedlichen Indikatorfarbstoffe können in einer Variante bei verschieden Graden der Aushärtung farblos werden, d.h. das beispielsweise bei einem Gemisch von zwei Indikatorfarbstoffen, der erste Indikatorfarbstoff wird farblos sobald die Zusammensetzung einen ersten Aushärtungsgrad erreicht hat und der zweite Farbstoff wird erst dann farblos sobald die Zusammensetzung einen zweiten Aushärtungsgrad erreicht hat. Dies ist vor allem interessant für Anwendungen, wo verschiedene Aushärtungsgrade der Zusammensetzung verschiedene darauf folgende Arbeitsschritte erlauben. Beispielsweise kann ein erster Aushärungsgrad erreicht sein, wenn es möglich ist die Zusammensetzung mit einer weiteren Zusammensetzung zu beschichten und ein zweiter Aushärtungsgrad, wenn es möglich ist die Zusammensetzung anzuschleifen. Es für den Fachmann klar, dass in der vollständig ausgehärteten Zusammensetzung alle Indikatorfarbstoffe in Sinne der Erfindung farblos sind.

Abhängig vom verwendeten Indikatorfarbstoff, ist es möglich, selektiv verschiedene Trocknungsgrade der Beschichtung zu ermitteln. Der Trocknungsgrad gibt den Grad der Aushärtung der Zusammensetzung gemäß DIN EN ISO 9117-5:2012 an. Erfindungsgemäß bedeutet der Begriff "ausgehärtet", dass in der Regel mindestens 50 % der NCO-Gruppen, vorzugsweise 60%, bevorzugter 80% abreagiert sind. Insbesondere bedeutet der Begriff "ausgehärtete Zusammensetzung", dass die Zusammensetzung eine Festigkeit erreicht hat, die ausreichend ist, um sie weiterzuverarbeiten. Beispiele für eine Weiterverarbeitung sind Schleifen, Polieren, Verpacken, Montieren, Laminieren, Bedrucken, Lasern, Fügen, Beschichten, Waschen, Reinigen, Stanzen, Nähen, Aufwickeln, Stapeln, Verformen, Testen, unter elektrischen Strom setzen, aus geschützter Umgebung verbringen oder Überlackieren, bevorzugt ist Weiterverarbeiten Schleifen, Polieren und/oder Montieren.

Ein geeigneter Indikatorfarbstoff weist zumindest ein Xanthen-Grundgerüst auf, vorzugsweise ein Fluoran-Grundgerüst. Vorzugsweise ist der Indikatorfarbstoff ein Fluorescein- oder Rhodaminderivat. Dabei sind insbesondere solche Derivate des Xanthens und Fluorans geeignet, die eine Spirolactonform bilden können. Dies sind insbesondere solche Derivate des Xanthens und Fluorans, die am zentralen Ring des Xanthengerüsts bzw. Fluorangerüsts am nicht anellierten Kohlenstoff(C9-Kohlenstoffatom des Xanthen- bzw. Fluorangrundgerüsts) einen Substituenten tragen, der eine Carbonsäuregruppe enthält, so dass die Carbonsäuregruppe mit dem nicht annelierten Kohlenstoffatom des Xanthengrundgerüsts ein Spirolacton, bevozugt als Fünfring, bilden kann. Der Substituent am nicht annelierten Kohlenstoffatom ist vorzugsweise ein 2-Benzoesäurerest oder ein 2-Phenylessigsäurerest. Beispielsweise seien genannt Fluorescein und seine Derivate und Salze sowie Rhodamin und seine Derivate und Salze, insbesondere Dibromofluorescein, Diiodofluorescein, Fluorescein-5-thioisocyanat, Fluoresceindiacetat, 4- and/or 5-Aminofluorescein, 4,5,6,7-Tetrachlorofluorescein, 2',4',5',7'-Tetrabromofluorescein (Eosin Y), 2',4',5',7'-Tetraiodofluorescein (Erythrosin B), 2',4',5',7'-Tetrabromo-3,4,5,6-tetrachlorofluorescein, 2',4',5',7'-Tetrabromo-3,4,5,6-tetrachlorofluorescein Dinatriumsalz (Phloxin B), 3,4,5,6-Tetrachloro-2',4',5',7'-tetraiodofluorescein (Bengalrosa), 3',4',5',6'-Tetrahydroxyspiro[2-benzofuran-3,9'-xanthen]-1-on (Pyrogallolphthalein), 9-(2-Carboxyphenyl)-3,6-bis(diethylamino)-xanthyliumchlorid (Rhodamin B), 5-Carboxytetramethylrhodamin und Sulfodi-o-tolyldiamino-o-carboxyphenylxanthenen-Natriumsalz (Violamin R). Weiterhin sind die von Xian-Fu Zhang, Jianlong Zhang und Limin Liu in J. Fluoresc. (2014) 24:819-826 beschriebenen Derivate des Fluoresceins geeignet. Weiterhin sind Farbstoffe, die in der Molekularbiologie als Fluoreszenzproben und/oder bei der Fluorophor-Markierung eingesetzt werden und ein Xanthengerüst enthalten und eine Spirolactonform bilden können, geeignet. Beispiele sind Verbindungen, die unter dem Namen Alexa Fluor® von der Fa. Molecular Probes, Inc., Eugene, USA vertrieben werden. Insbesondere Alexa Fluor® 488, 546 und 568 sind geeignet. Bei allen vorgenannten Farbstoffen können - soweit chemisch darstellbar - sowohl die reinen Säuren oder Basen als auch deren Salze wie beispielsweis Natriumsalze der Fluoresceinderivate oder Chloride der Rhodaminderivate zum Einsatz kommen. Bevorzugt sind solche Farbstoffe, deren Farbänderung bei der Härtung der Zusammensetzung gegenüber dem Untergrund und einer gegebenenfalls vorhandenen Färbung der Zusammensetzung gut sichtbar ist. Beispiel für eine solche Farbänderung ist die teilweise oder bevorzugt vollständige Entfärbung eines roten Farbstoffs, die auf vielen Untergründen für das Auge besser sichtbar ist als die Entfärbung eines gelben Farbstoffs.

Vorzugsweise ist der mindestens eine Indikatorfarbstoff ausgewählt aus der Gruppe bestehend aus Fluoresceinderivaten und/oder Rhodaminderivaten insbesondere solche die eine Spirolactonform bilden können, d.h. am zentralen Ring des Xanthengrundgerüsts am nicht annelierten Kohlenstoff (C9-Kohlenstoffatom des Xanthengrundgerüsts) einen Substituenten aufweist der eine Carbonsäuregruppe enthält, wobei diese Carbonsäuregruppe mit diesem nicht annelierten Kohlenstoffatom ein Spirolacton ausbilden kann. Besonders bevorzugt sind Fluoresceinderivate, welche vorzugsweise eine Spirolactonform bilden können. Besonders bevorzugt sind 2',4',5',7'-Tetraiodofluorescein (Erythrosin B), 3,4,5,6-Tetrachloro-2',4',5',7'-tetrabromofluorescein, 3,4,5,6-Tetrachloro-2',4',5',7'-tetraiodofluorescein (Bengalrosa) und deren Salze. Ganz besonders bevorzugt ist 3,4,5,6-Tetrachloro-2',4',5',7'-tetrabromofluorescein sowie dessen Dinatriumsalz (Phloxin B).Der mindestens eine Indikatorfarbstoff kann weiterhin mit Hilfs- und Zusatzstoffen wie Lösemitteln, Stabilisatoren, Füllstoffen sowie Antiabsetzmitteln, Entschäumungs-, Antikrater- und/oder Netzmitteln, Dispergierhilfsmitteln, Verlaufsmitteln, filmbildende Hilfsmitteln sowie Substanzen zur Rheologiesteuerung gemischt werden.

Geeignete Lösungsmittel sind in dem Fachmann bekannter Art und Weise abgestimmt auf den Indikatorfarbstoff sowie die Zusammensetzung und das Applikationsverfahren einzusetzen. Lösemittel sollen den oder die Indikatorfarbstoffe lösen und deren Vermischung - gegebenenfalls auch mit der Zusammensetzung - fördern sowie Unverträglichkeiten vermeiden. Die Indikatorfarbstoffe sind zumeist in Wasser und/oder Alkoholen gut löslich, so dass diese Lösemittel bevorzugt sind.

In einer bevorzugten Ausführungsform werden der mindestens eine Indikatorfarbstoff und die mindestens eine Protonenquelle des erfindungsgemäßen Indikatorsystems mit Hilfs- und Zusatzstoffen nach gängigen Methoden vermischt. Es dabei bevorzugt, dass der mindestens eine Indikatorfarbstoff und die mindestens eine Protonenquelle in gelöster Form vorliegen oder das der mindestens eine Indikatorfarbstoff aus gelöster Form abgeschieden wird, dass er von den weiteren Bestandteilen der Zusammensetzung des erfindungsgemäßen Indikatorsystems möglichst schnell und möglichst vollständig wieder in Lösung gebracht werden kann. In einer bevorzugten Ausführungsform ist der mindestens eine Indikatorfarbstoff und die mindestens eine Protonenquelle mit mindestens einem Dispergierhilfsmittel vermischt, das das Wiederlösen des abgeschiedenen Indikatorfarbstoffs unterstützt.

In einer bevorzugten Ausführungsform enthält das erfindungsgemäße Indikatorsystem eine Zusammensetzung die mindestens eine NCO-reaktive Verbindung ausgewählt aus der Gruppe bestehend aus Polyasparaginsäureestern, Polyacrylatpolyolen, Polyesterpolyolen und / oder Mischungen aus mindestens zwei hieraus und mindestens ein Polyisocyanat enthält, wobei das Polyisocyanat ein Derivat des Hexamethylendiisocyanats und/oder des Pentamethylendiisocyanats ist, mindestens eine Protonenquelle ausgewählt aus der Gruppe bestehend aus Mono- und/oder Di-Alkylester der Phosphorsäure wie Dibutylphosphat oder Ethylhexylphosphat, Arensulfonsäuren wie 4-Dodecylbenzolsulfonsäure und flüssigen Monocarbonsäuren wie 2-Ethyl¬hexan¬säure oder Milchsäure und mindestens einen Indikatorfarbstoff ausgewählt aus der Gruppe der Fluorescein- und Rhodaminderviate, die ein Spirolactonform bilden können. In einer weiteren bevorzugten Ausführungsform enthält das erfindungsgemäße Indikatorsystem eine Zusammensetzung enthaltend mindestens eine NCO-reaktive Verbindung, wobei die NCO-reaktive Verbindung ein Polyacrylatpolyol oder ein Polyasparaginsäureester ist, und mindestens ein Polyisocyanat, wobei das Polyisocyanat ein Derivat des Hexamethylendiisocyanats und/oder des Pentamethylendiisocyanats ist, mindestens eine Protonenquelle ausgewählt aus der Gruppe bestehend aus Mono- und/oder Di-Alkylester der Phosphorsäure wie Dibutylphosphat oder Ethylhexylphosphat, Arensulfonsäuren wie 4-Dodecylbenzolsulfonsäure und flüssigen Monocarbonsäuren wie 2-Ethyl¬hexan¬säure oder Milchsäure und mindestens einen Indikatorfarbstoff, wobei der Indikatorfarbstoff ein Fluoresceinderivat ist welches eine Spirolactonform ausbilden kann. In einer weiteren bevorzugten Ausführungsform enthält das erfindungsgemäße Indikatorsystem eine Zusammensetzung enthaltend mindestens eine NCO-reaktive Verbindung, wobei die NCO-reaktive Verbindung ein Polyacrylatpolyol oder ein Polyasparaginsäureester ist und mindestens ein Polyisocyanat, wobei das Polyisocyanat ein Derivat des Hexamethylendiisocyanats und/oder des Pentamethylendiisocyanats ist, mindestens eine Protonenquelle ausgewählt aus der Gruppe bestehend aus Mono- und/oder Di-Alkylester der Phosphorsäure wie Dibutylphosphat oder Ethylhexylphosphat, Arensulfonsäuren wie 4-Dodecylbenzolsulfonsäure und flüssigen Monocarbonsäuren wie 2-Ethyl¬hexan¬säure oder Milchsäure und mindestens einen Indikatorfarbstoff ausgewählt aus der Gruppe bestehend aus 2',4',5',7'-Tetraiodofluorescein (Erythrosin B), 3,4,5,6-Tetrachloro-2',4',5',7'-tetrabromofluorescein, 3,4,5,6-Tetrachloro-2',4',5',7'-tetraiodofluorescein (Bengalrosa) und deren Salze. Eine besonders bevorzugte Kombination von Indikatorfarbstoff und Protonenquelle ist 3,4,5,6-Tetrachloro-2',4',5',7'-tetrabromofluorescein sowie dessen Dinatriumsalz (Phloxin B) in Kombination mit Milchsäure, bevorzugt in ihrer racemischen Form.

In einer bevorzugten Aufführungsform der Erfindung sind der mindestens eine Indikatorfarbstoff und die mindestens eine Protonenquelle auf der Oberfläche eines inerten Trägers aufgebracht. Hierzu werden der mindestens eine Indikatorfarbstoff und die mindestens eine Protonenquelle zunächst auf ein Trägermaterial aufgebracht. Das den mindestens eine Indikatorfarbstoff und die mindestens eine Protonenquelle enthaltende Trägermaterial wird, in einem zeitlich und/oder räumlich getrennten Schritt gemeinsam mit dem Substrat, mit der Zusammensetzung beschichtet, so dass der mindestens eine Indikatorfarbstoff und die mindestens eine Protonenquelle nur mit der Beschichtung auf dem Trägermaterial und nicht mit der Beschichtung auf dem Substrat in Kontakt kommt. Beim Inkontaktbringen mit der Zusammensetzung werden der mindestens eine Indikatorfarbstoff und die mindestens eine Protonenquelle vom Träger gelöst und vermischen sich mit der Zusammensetzung auf dem Trägermaterial. Die Härtung der Beschichtung auf dem Substrat wird dann durch die Farbänderung der Zusammensetzung auf dem Trägermaterial zuverlässig angezeigt.

Die Menge an zugesetzter Protonenquelle richtet sich nach der Menge an basischen Bestandteilen wie zum Beispiel basische Lichtschutzmittel (HALS) oder basische Polymere wie zum Beispiel Polyasparaginsäureester, die in der Zusammensetzung vorhanden sind. Die Protonenquelle soll diese Bestandteile neutralisieren. Die erforderliche Dosierung ist beispielsweise durch einfache Vorversuche zu ermitteln, in den durch allmähliche Steigerung der Zusatzmengen an Protonenquelle der Einfluss auf die Entfärbung des Indikatorfarbstoffs festgestellt wird und anschließend mit mindestens der Konzentration weitergearbeitet wird, die zu einer vollständigen Entfärbung während der Härtung führt. Bevorzugt werden zwischen 0,05 und 2,00 Gew.-% an Protonenquelle bezogen auf die Gesamtmasse der Zusammensetzung eingesetzt.

Die Menge an Indikatorfarbstoff bezogen auf die Zusammensetzung sollte so gewählt sein, dass sie mindestens so hoch ist, dass sich die Entfärbung während der Aushärtung mit dem Auge gut verfolgen lässt. Sie sollte auf der anderen Seite nicht so hoch sein, dass der Zusatz des Indikatorfarbstoffs die Aushärtung beispielsweise in der Art eines Füllstoffs beeinflusst. Im Allgemeinen sind Indikatorfarbstoffkonzentrationen zwischen 5 und 5000 mg/kg, bevorzugt zwischen 50 und 1000 mg/kg, insbesondere zwischen 100 und 500 mg/kg bezogen auf den reinen Indikatorfarbstoff und auf die nichtflüchtigen Bestandteile der Zusammensetzung geeignet. Die nichtflüchtigen Bestandteile sind nach DIN EN ISO 3251:2008 an einer Probe von 2,0 g in einem Umluftofen bei 100 °C und 120 Minuten Verweilzeit zu bestimmen.

Geeignete Träger bzw. Trägermaterialien sind solche, auf die der mindestens eine Indikatorfarbstoff und die mindestens eine Protonenquelle so aufgebracht werden können, dass sie sich beim Beschichten mit der Zusammensetzung wieder vom Trägermaterial lösen, in der aufbrachten Zusammensetzung gelöst werden und so die Aushärtung der Beschichtung bzw. Zusammensetzung durch eine Farbänderung des mindestens einen Indikatorfarbstoff anzeigt wird. Geeignete Trägermaterialien sind beispielsweise Folien aus Kunststoff oder Metall, Papiere, Karton, mehrschichtige Laminate aus den vorgenannten Materialien sowie vorgenannte Materialien, die mit einer faserartigen Schicht beispielsweise aus Cellulose, Watte, Textil und/oder Glasfasern beschichtet sind. Weiterhin vorgenannte Materialien, die mit einer Lack- oder Klebeschicht versehen sind, auf die der Indikatorfarbstoff aufgebracht wird. Es sind dabei Trägermaterialien mit solchen Oberflächen bevorzugt, von denen der mindestens eine Indiktorfarbstoff und die mindestens eine Protonenquelle nach dem Beschichten des Trägermaterials mit der Zusammensetzung möglichst leicht wieder in die Zusammensetzung übergehen. Beispiele hierfür sind Kunststofffolien, besonders solche aus Poylvinylacetat, Polyestern, Polycarbonat oder Polymethylmethacrylat, insbesondere aus Polycarbonat oder Polyethylenterephthalat. Die Folien können glatte oder rauhe, strukturierte Oberflächen haben. Bevorzugt ist das Trägermaterial zumindest an der Oberfläche, auf die der mindestens eine Indikatorfarbstoff und die mindestens eine Protonenquelle aufgetragen werden, weiß, wenn es sich bei der Zusammensetzung um einen Klarlack handelt, da sich Farbänderungen vor einem weißen Hintergrund mit dem menschlichen Auge besonders gut erkennen lassen. Ist die Zusammensetzung kein Klarlack, sondern pigmentiert, ist das Trägermaterial bevorzugt transparent und ungefärbt, so dass eine Farbänderung mit dem Auge durch das Trägermaterial hindurch beobachtet werden kann. Vorzugsweise ist der inerte Träger eine Polymerfolie oder ein Glasfaservlies, besonders bevorzugt eine Polymerfolie, insbesondere eine Polyethylenterephthalat- oder Polycarbonatfolie ist. In einer bevorzugten Ausführungsform ist der inerte Träger farblos und transparent.

In einer weiteren Ausführungsform ist der mindestens eine Indikatorfarbstoff und die mindestens eine Protonenquelle auf einer ersten Oberfläche eines inerten Trägers aufgebracht, wobei der inerte Träger mit einer zweiten Oberfläche, welche von der ersten Oberfläche abgewandt ist, auf einem zweiten inerten Träger aufgebracht ist. Für den zweiten inerten Träger kommen alle oben genannten Träger in Betracht. Vorzugsweise ist der zweite Träger ausgewählt aus der Gruppe bestehend aus Polymerfolien, Metallfolien, Papier und/oder Karton. In einer bevorzugten Ausführungsform ist der erste Träger farblos und transparent und der zweite Träger weiß. Dies hat den Vorteil das der Farbverlauf den der Indikatorfarbstoff beim Aushärten der Zusammensetzung durchläuft besser sichtbar ist.

In einer bevorzugten Ausführungsform ist der inerte Träger eine Polymerfolie oder ein Glasfaservlies, die mindestens eine Protonenquelle ausgewählt aus der Gruppe bestehend aus Mono- und/oder Di-Alkylester der Phosphorsäure wie Dibutylphosphat oder Ethylhexylphosphat, Arensulfonsäuren wie 4-Dodecylbenzolsulfonsäure und flüssigen Monocarbonsäuren wie 2-Ethyl¬hexan¬säure oder Milchsäure und der mindestens eine Indikatorfarbstoff ein Fluorescein- und/oder Rhodaminderviat, welches eine Spirolactonform bilden kann, insbesondere ein Fluoresceinderviat, welches eine Spirolactonform bilden kann. In einer anderen bevorzugten Ausführungsform ist der inerte Träger eine Polymerfolie die mindestens eine Protonenquelle ausgewählt aus der Gruppe bestehend aus Mono- und/oder Di-Alkylester der Phosphorsäure wie Dibutylphosphat oder Ethylhexylphosphat, Arensulfonsäuren wie 4-Dodecylbenzolsulfonsäure und flüssigen Monocarbonsäuren wie 2-Ethyl¬hexan¬säure oder Milchsäure und der mindestens eine Indikatorfarbstoff ausgewählt aus der Gruppe bestehend aus 2',4',5',7'-Tetraiodofluorescein (Erythrosin B), 3,4,5,6-Tetrachloro-2',4',5',7'-tetrabromofluorescein, 3,4,5,6-Tetrachloro-2',4',5',7'-tetraiodofluorescein (Bengalrosa) und deren Salze. In einer bevorzugten Ausführungsform ist der inerte Träger eine Polymerfolie oder ein Glasfaservlies, der zweite inerte Träger ausgewählt aus der Gruppe bestehend aus Polymerfolien, Metallfolien, Papier und/oder Karton die mindestens eine Protonenquelle ausgewählt aus der Gruppe bestehend aus Mono- und/oder Di-Alkylester der Phosphorsäure wie Dibutylphosphat oder Ethylhexylphosphat, Arensulfonsäuren wie 4-Dodecylbenzolsulfonsäure und flüssigen Monocarbonsäuren wie 2-Ethyl¬hexan¬säure oder Milchsäure und der mindestens eine Indikatorfarbstoff ein Fluorescein- und/oder Rhodaminderviat, welches eine Spirolactonform bilden kann, insbesondere ein Fluoresceinderviat, welches eine Spirolactonform bilden kann. In einer anderen bevorzugten Ausführungsform ist der inerte Träger eine Polymerfolie, der zweite inerte Träger ausgewählt aus der Gruppe bestehend aus Polymerfolien, Metallfolien, Papier und/oder Karton und vorzugsweise weiß, die mindestens eine Protonenquelle ausgewählt aus der Gruppe bestehend aus Mono- und/oder Di-Alkylester der Phosphorsäure wie Dibutylphosphat oder Ethylhexylphosphat, Arensulfonsäuren wie 4-Dodecylbenzolsulfonsäure und flüssigen Monocarbonsäuren wie 2-Ethyl¬hexan¬säure oder Milchsäure und der mindestens eine Indikatorfarbstoff ausgewählt aus der Gruppe bestehend aus 2',4',5',7'-Tetraiodofluorescein (Erythrosin B), 3,4,5,6-Tetrachloro-2',4',5',7'-tetrabromofluorescein, 3,4,5,6-Tetrachloro-2',4',5',7'-tetraiodofluorescein (Bengalrosa) und deren Salze.

Der mindestens eine Indikatorfarbstoff und die mindestens eine Protonenquelle wird durch geeignete Methoden auf mindestens eine der Oberflächen des Trägermaterials aufgebracht. Methoden zum Aufbringen sind beispielsweise Drucken, Streichen, Rollen, Gießen, Rakeln, Walzen, Tauchen und/oder Spritzen, wobei Walzen, Rakeln und Drucken bevorzugt sind. Nach dem Aufbringen wird - soweit Lösemittel im Indikatorfarbstoff vorhanden sind - dieses durch übliche Trockenmethoden entfernt. Das Trägermaterial auf dem der mindestens eine Indikatorfarbstoff und die mindestens eine Protonenquelle aufgebracht sind, kann durch Aufbringen einer temporären Schutzschicht beispielsweise einer Kaschierfolie aus Polypropylen vor Beschädigung während Lagerung und Transport geschützt werden. Weiterhin kann der Träger beispielsweise auf der nicht mit dem mindestens einen Indikatorfarbstoff und der mindestens einen Protonenquelle beschichten Seite eine haftklebrige Schicht enthalten mittels derer der Träger beispielsweise an einem Substrat bzw. Objekt oder an einem Träger für das Substrat befestigt werden kann. Die haftklebrige Schicht kann optional ebenfalls mit einer Kaschierfolie während Lagerung und Transport geschützt werden.

Die Zusammensetzung wird durch geeignete Methoden auf ein Substrat bzw. Objekt und das den mindestens einen Indikatorfarbstoff und die mindestens eine Protonenquelle enthaltende Trägermaterial aufgebracht. Substrat und Trägermaterial befinden sich dabei bevorzugt in unmittelbarer räumlicher Nähe, so dass die Aushärtung der weiteren Bestandteile der Zusammensetzung auf dem Substrat und die Aushärtung der Zusammensetzung auf dem Trägermaterial unter möglichst gleichen Bedingungen erfolgt. Beispielsweise kann das Trägermaterial am Rand des Substrats oder an einer Halterung, die das Substrat während des Beschichtens hält, befestigt sein.

Methoden zum Aufbringen der Zusammensetzung auf Substrat bzw. Objekt und das den mindestens einen Indikatorfarbstoff und die mindestens eine Protonenquelle enthaltende Trägermaterial sind beispielsweise Drucken, Streichen, Rollen, Gießen, Rakeln, Walzen, Tauchen, Wirbelschichtverfahren und/oder bevorzugt Spritzen wie beispielsweise Druckluftspritzen, Airless-Spritzen, Hochrotationszerstäubung. Der Spritzauftrag kann gegebenenfalls verbunden werden mit einer elektrostatischen Aufladung der zerstäubten Teilchen (ESTA) und/oder gegebenenfalls verbunden werden mit der Heißspritzapplikation wie zum Beispiel Hot-Air-Heißspritzen oder Heißdampfspritzen. Bei Spritzmethoden, die ein Gas zum Zerstäuben und/oder zum Transferieren der zerstäubten Teilchen nutzen, kommen neben Luft auch andere Gase wie beispielsweise Stickstoff, Kohlendioxid oder Wasserdampf in Frage.

Geeignete Substrate bzw. Objekte sind beispielsweise einen oder mehrere Werkstoffe umfassende Substrate, insbesondere auch sogenannte Verbundwerkstoffe. Ein Substrat, das aus mindestens zwei Werkstoffen aufgebaut ist, wird erfindungsgemäß als Verbundwerkstoff bezeichnet. Geeignete Werkstoffe sind beispielsweise Holz, Metall, Kunststoff, Papier, Leder, Textilien, Filz, Glas, Holzwerkstoffe, Kork, Gummi, Linoleum, anorganisch gebundene Substrate wie Holz- und Faserzementplatten, elektronische Baugruppen oder mineralische Untergründe. Geeignete Verbundwerkstoffarten sind beispielsweise Teilchenverbundwerkstoffe, auch als Dispersionswerkstoffe bezeichnet, Faserverbundwerkstoffe, Schichtverbundwerkstoffe, auch als Laminate bezeichnet, Durchdringungsverbundwerkstoffe sowie Strukturverbundwerkstoffe.

Geeignete Metalle sind beispielsweise Stahl, Aluminium, Magnesium sowie Legierungen von Metallen, wie es in den Anwendungen der sogenannten Draht-, Coil-, Can- oder Container-Lackierung verwendet wird, und dergleichen.

Im Rahmen der Erfindung werden unter dem Begriff Kunststoff auch faserverstärkte Kunststoffe, wie beispielsweise Glas- oder Carbonfaser verstärkte Kunststoffe, und Kunststoffblends aus mindestens zwei oder mehr Kunststoffen verstanden. Beispiele für erfindungsgemäß geeignete Kunststoffe sind ABS, AMMA, ASA, CA, CAB, EP, UF, CF, MF, MPF, PF, PAN, PA, PE, HDPE, LDPE, LLDPE, UHMWPE, PET, PMMA, PP, PS, SB, PUR, PVC, RF, SAN, PBT, PPE, POM, PUR-RIM, SMC, BMC, PP-EPDM und UP (Kurzbezeichnungen nach DIN 7728T1). Diese können auch in Form von Folien oder als Glas- oder Carbonfaser verstärkte Kunststoffe vorliegen.

Die Substrate können bereits mit einer oder mehreren Lackschichten ganz oder teilweise beschichtet sein. Diese Lackschichten können noch ungehärtet oder feucht, teilgehärtet oder vollständig gehärtet sein, vorzugsweise sind die weiteren Lackschichten auf dem Substrat teilgehärtet oder vorständig gehärtet. Beispiele für Lackschichten sind Grundierungen, Primer, Füller, Spachtel, Basislacke oder bereits vollständig lackierte Substrate, die nach einer eventuellen Vorbehandlung wie Anschleifen oder Plasmaaktivierung erneut überschichtet werden. Insbesondere sind Substrate, wie sie in der Reparaturlackierung oder Lackierung im Rahmen von Renovierungen oder Wartungen bei Fahrzeugen, insbesondere bei Schiffen, Flugzeugen, Kraftfahrzeugen wie Autos, Lastkraftwagen, Bussen, Großfahrzeugen, Bahnfahrzeugen auftreten, geeignet.

An das Aufbringen der Zusammensetzung des erfindungsgemäßen Indikatorsystems schließt sich die Aushärtung bzw. die Trocknung dieser Zusammensetzung auf dem Substrat bzw. Objekt und gegebenenfalls auf dem Trägermaterial an. Diese erfolgt nach den in der Beschichtungstechnologie üblichen Methoden entweder unter Umgebungsbedingungen bezüglich Temperatur und Luftfeuchte oder unter forcierten Bedingungen beispielsweise durch Temperaturerhöhung in Öfen, Einsatz von Strahlung wie beispielsweise Infrarot- oder Nahinfrarot- oder Mikrowellenstrahlung, sowie Einsatz von entfeuchteter und/oder erwärmter Luft oder anderen Gasen. Bevorzugt ist dabei, auf den Einsatz von Geräten zur forcierten Aushärtung zu verzichten oder nur solche Geräte einzusetzen, die es erlauben, das Entfärben des mindestens einen Indikatorfarbstoffs mit dem menschlichen Auge zu verfolgen. Während der Aushärtung der Zusammensetzung verblasst die Farbe des mindestens einen Indikatorfarbstoffs allmählich, bevorzugt bis zur Farblosigkeit für das menschliche Auge und zeigt damit die erfolgte Aushärtung an.

Ein weiterer Gegenstand der Erfindung ist ein Verfahren zur optischen Anzeige des Aushärtungsfortschritts einer Zusammensetzung, welche mindestens eine NCO-reaktive Verbindung und mindestens ein Polyisocyanat enthält, dadurch gekennzeichnet, dass das Verfahren die folgenden Schritte umfasst:
(a) Bereitstellen mindestens eines Indikatorfarbstoffs und mindestens einer Protonenquelle, wobei der mindestens eine Indikatorfarbstoff zumindest ein Xanthen-Grundgerüst aufweist, und wobei der mindestens eine Indikatorfarbstoff und die mindestens eine Protonenquelle auf der Oberfläche eines inerten Trägers aufgebracht sind.
(b) Inkontaktbringen des mindestens einen Indikatorfarbstoffs und der mindestens einen Protonenquelle aus Schritt (a) mit der ungehärteten Zusammensetzung, wobei der mindestens eine Indikatorfarbstoff eine erste Farbe aufweist, und
(c) Härten der Zusammensetzung, wobei der mindestens eine Indikatorfarbstoff durch Farbumschlag von der ersten Farbe nach farblos die Aushärtung der Zusammensetzung anzeigt.

Bei der im erfindungsgemäßen Verfahren verwendeten Zusammensetzung umfassend mindestens eine NCO-reaktive Verbindung und mindestens ein Polyisocyanat sowie dem mindestens einen Indikatorfarbstoff und der mindestens einen Protonenquelle handelt es sich um das erfindungsgemäße Indikatorsystem. Die oben hierzugetroffen Aussagen bezüglich weiterer Aufführungsformen und Herstellungswegen und möglichen Verarbeitungsschritten gelten analog für das erfindungsgemäße Verfahren.

Das Inkontaktbringen des mindestens einen Indikatorfarbstoffs und der mindestens einen Protonenquelle mit der ungehärteten Zusammensetzung kann, wie oben beschrieben, durch vorheriges Auftragen des mindestens eine Indikatorfarbstoffs und der mindestens einen Protonenquelle auf ein Trägermaterial, nachträglichem Ablösen vom Trägermaterial und Vermischen des mindestens einen Indikatorfarbstoffs und der mindestens einen Protonenquelle mit der auf dem Träger aufgebrachten Zusammensetzung, erfolgen.

In einer bevorzugten Ausführungsform wird die Zusammensetzung auf ein Substrat oder Objekt aufgetragen bzw. diese ist mit der Zusammensetzung beschichtet worden. Für das Substrat bzw. Objekt gelten ebenfalls die oben getroffenen Aussagen bezüglich der Art des Substrats und der weiteren Ausführungsformen.

In einer bevorzugten Ausführungsform ist der mindestens eine Indikatorfarbstoff und die mindestens eine Protonenquelle aus Schritt (a) auf der Oberfläche eines inerten Trägers aufgebracht, wobei der inerte Träger eine Polymerfolie oder ein Glasfaservlies, besonders bevorzugt eine Polymerfolie, insbesondere eine Polyethylenterephthalat- oder Polycarbonatfolie. In einer weiteren bevorzugten Ausführungsform ist der inerte Träger mit einer zweiten Oberfläche, welche von der ersten Oberfläche abgewandt ist, auf einem zweiten inerten Träger aufgebracht ist. Vorzugsweise ist der zweite Träger ausgewählt aus der Gruppe bestehend aus Polymerfolien, Metallfolien, Papier und/oder Karton. In einer bevorzugten Ausführungsform ist der erste Träger farblos und transparent und der zweite Träger weiß ist. Für den ersten und zweiten Träger gelten ebenfalls die oben getroffenen Aussagen bezüglich der Art der Träger und der weiteren Ausführungsformen.

Ein weiterer Gegenstand der vorliegenden Erfindung ist ein Verfahren zur optischen Ermittlung des Aushärtungsfortschritts einer Zusammensetzung enthaltend mindestens eine NCO-reaktive Verbindung und mindestens ein Polyisocyanat, mit mindestens einem Indikatorfarbstoff und mindestens einer Protonenquelle, wobei der mindestens eine Indikatorfarbstoff zumindest ein Xanthen-Grundgerüst aufweist, dadurch gekennzeichnet, dass nach Inkontaktbringen des mindestens einen Indikatorfarbstoffs und der mindestens einen Protonenquelle mit der Zusammensetzung, die Farbe des mindestens einen Indikatorfarbstoffs mit einer Farbskala verglichen wird, um den Aushärtungsfortschritt zu ermitteln.

Bei der im erfindungsgemäßen Verfahren verwendeten Zusammensetzung umfassend mindestens eine NCO-reaktive Verbindung und mindestens ein Polyisocyanat sowie dem mindestens einen Indikatorfarbstoff und der mindestens einen Protonenquelle handelt es sich um das erfindungsgemäße Indikatorsystem. Die oben hierzugetroffen Aussagen bezüglich weiterer Aufführungsformen und Herstellungswegen und möglichen Verarbeitungsschritten gelten analog für das erfindungsgemäße Verfahren.

Das Inkontaktbringen des mindestens einen Indikatorfarbstoffs und der mindestens einen Protonenquelle mit der ungehärteten Zusammensetzung kann, wie oben beschrieben durch vorheriges Auftragen des mindestens einen Indikatorfarbstoffs und der mindestens einen Protonenquelle auf ein Trägermaterial, nachträglichem Ablösen vom Trägermaterial und Vermischen des mindestens einen Indikatorfarbstoffs und der mindestens einen Protonenquelle mit der auf dem Träger aufgebrachten Zusammensetzung, erfolgen.

Hierdurch wird es ermöglicht eine gegebene Zusammensetzung und ihre Aushärtung mit einem Indikatorfarbstoff zunächst zu untersuchen und einen Zusammenhang zwischen dem Aushärtungsgrad und der Intensität der Färbung des Farbstoffs bei gegebener Konzentration und Schichtdicke herzustellen. Für den Grad der Härtung kann beispielsweise die Bestimmung des Trockengrades in Anlehnung an DIN EN ISO 9117-5:2012 herangezogen werden. Weiterhin können Trockenzeitmessgeräte oder Trocknungsrekorder wie das Modell von Byk-Gardner GmbH, Geretsried, DE oder das Modell 450 der Fa. Erichsen GmbH & Co. KG, Hemer, DE, die nach den Normen ASTM D 5895 (01.06.2013), ISO 9117-4:2012 und/oder DIN EN 14022:2010 arbeiten können, eingesetzt werden. Auch kann durch einfaches Ausprobieren, der frühste, mögliche Zeitpunkt für eine Weiterverarbeitung wie beispielsweise Schleifen, Polieren, Verpacken, Montieren, Laminieren, Bedrucken, Lasern, Fügen, Beschichten, Waschen, Reinigen, Stanzen, Nähen, Aufwickeln, Stapeln, Verformen, Testen, unter elektrischen Strom setzen, aus geschützter Umgebung verbringen oder Überlackieren bestimmt werden. Ist für eine gegebene Zusammensetzung und die gewünschte Aushärtung durch solche Vorversuche der Grad der Entfärbung bestimmt, kann bei einer Wiederholung oder bei einer vielfachen Beschichtung von Substraten einfach der für die Weiterverarbeitung notwendige Härtungsgrad an der Entfärbung des Indikatorsystems abgelesen werden und damit die Weiterverarbeitung zum frühsten, technisch sinnvollen Zeitpunkt erfolgen, ohne dass weitere Messungen erfolgen müssen oder die Oberfläche der Zusammensetzung berührt werden muss. In einer bevorzugten Ausführungsform wird zum Vergleich der gewünschten Entfärbung eine entsprechende Referenzoberfläche beispielsweise eine mit einem Farbton bedruckte weiße Papieroberfläche oder ein auf einem elektronischen Bildschirm farbig angezeigte Fläche bereitgestellt, auf der die gewünschte Entfärbung des Indikatorsystems farbig und nicht veränderlich festgehalten ist. Dies kann entweder durch Bereitstellung nur des einen gewünschten Vergleichsfarbtons erfolgen oder durch Bereitstellung einer Farbskala, so dass der komplette Vorgang der Entfärbung, bis zum gewünschten Grad der Entfärbung verfolgt werden kann. Es ist dann für das menschliche Auge möglich, durch einen Farbvergleich zwischen unveränderlicher Farbe der Referenzoberfläche und verblassender Farbe des Indikatorfarbstoffs den frühsten technisch sinnvollen Zeitpunkt der Weiterverarbeitung zu bestimmen. Im Fall des Einsatzes einer Farbskala kann durch eindeutige Kennzeichnung des entsprechenden Farbtons z.B. durch Buchstaben oder Ziffern eine Vorgabe gemacht werden, bis zum Erreichen welchen Farbtons die Farbe des Indikatorfarbstoffs verblassen muss, bevor die Weiterverarbeitung des beschichteten Substrats erfolgen soll. Das Bereitstellen des Vergleichsfarbtons oder der Farbskala kann dabei mit üblichen drucktechnischen Methoden oder durch Darstellung auf üblichen, zur Farbdarstellung geeigneten Bildschirmen erfolgen.

Ein weiterer Gegenstand der vorliegenden Erfindung ist ein Kit-of-parts umfassend mindestens einen Indikatorfarbstoff, wobei der mindestens eine Indikatorfarbstoff zumindest ein Xanthen-Grundgerüst aufweist, mindestens eine Protonenquelle und eine Zusammensetzung enthaltend mindestens eine NCO-reaktive Verbindung und mindestens ein Polyisocyanat, wobei der mindestens eine Indikatorfarbstoff und die mindestens eine Protonenquelle vorzugsweise auf einer ersten Oberfläche eines inerten Trägers aufgebracht sind, vorzugsweise ist der inerte Träger mit einer Oberfläche auf einem zweiten inerten Träger aufgebracht, wobei der zweite Träger vorzugsweise weiß ist.

Bei der im erfindungsgemäßen Kit-of-parts verwendeten Zusammensetzung umfassend mindestens eine NCO-reaktive Verbindung und mindestens ein Polyisocyanat sowie dem mindestens einen Indikatorfarbstoff, der mindestens einen Protonenquelle und dem inerten Träger handelt es sich um das erfindungsgemäße Indikatorsystem. Die oben hierzugetroffen Aussagen bezüglich weiterer Aufführungsformen und Herstellungswegen und möglichen Verarbeitungsschritten gelten analog für das erfindungsgemäße Kit-of-parts.

In einer bevorzugten Ausführungsform kann der oben beschriebene auf ein Trägermaterial aufgebrachte mindestens eine Indikatorfarbstoff und die mindestens eine Protonenquelle inklusiver optionaler Schutz- und/oder Klebeschicht oder -schichten zusammen mit einer Farbskala und optional einer Anleitung zur Verwendung als Kit-of-parts gemeinsam oder getrennt zu der Zusammensetzung eingesetzt werden. Bevorzugt wird dabei dem Kit-of-parts oder der Zusammensetzung die Information über die Farbe des mindestens einen Indikators, der dem frühsten, technisch sinnvollen Zeitpunkt der Weiterverarbeitung entspricht, beigefügt. Beispielsweise können einem 2K-PU-Klarlacksystem für die Autoreparatur ein Kit-of-parts aus mehreren mit mindestens einem Indikatorfarbstoff und der mindestens einen Protonenquelle beschichteten weißen Folien sowie eine Farbskala mitgegeben werden. Vor Applikation des Klarlacks befestigt der Lackierer dann eine mit mindestens einen Indikatorfarbstoff und der mindestens einen Protonenquelle beschichtetes Folie derart am Träger, der das zu lackierende Teil hält, dass durch beim Lackieren üblichen Kreuzgang mit der Lackierpistole in etwa die gleiche Lackmenge, die auf das Substrat aufgebracht wird, auch auf die Folie mit dem mindestens einen Indikatorfarbstoffs und der mindestens einen Protonenquelle gelangt. Am Verblassen der Farbe auf der Folie kann der Lackierer mit Hilfe der im Kit-of-parts befindlichen Farbskala als Referenz und der beispielsweise vom Lacklieferanten vorab ermittelten und mitgeteilten Zielfärbung feststellen, wann der gewünschte Aushärtungsgrad erreicht ist, der erlaubt, mit dem Schleifen und Polieren anzufangen oder der erlaubt, dass Fahrzeug auch bei Regen im Freien abzustellen.

Ein weiterer Gegenstand der vorliegenden Erfindung ist ein Verfahren zur Erhöhung der Taktfrequenz zwischen einem Beschichtungsschritt und einem weiteren nachfolgenden Verarbeitungsschritt bei Objekten, die mit einer Zusammensetzung, welche mindestens eine NCO-reaktive Verbindung und mindestens ein Polyisocyanat enthält, beschichtet werden, dadurch gekennzeichnet, dass mindestens ein Indikatorfarbstoff in Gegenwart von mindestens einer Protonenquelle, mit der Zusammensetzung in Kontakt gebracht wird um den Aushärtungsfortschritt der Beschichtung anzuzeigen, wobei der mindestens eine Indikatorfarbstoff zumindest ein Xanthen-Grundgerüst aufweist.

Bei der im erfindungsgemäßen Verfahren verwendeten Zusammensetzung umfassend mindestens eine NCO-reaktive Verbindung und mindestens ein Polyisocyanat sowie dem mindestens einen Indikatorfarbstoff und der mindestens einen Protonenquelle handelt es sich um das erfindungsgemäße Indikatorsystem. Die oben hierzugetroffen Aussagen bezüglich weiterer Aufführungsformen und Herstellungswegen und möglichen Verarbeitungsschritten gelten analog für das erfindungsgemäße Verfahren.

Das Inkontaktbringen des mindestens einen Indikatorfarbstoffs und der mindestens einen Protonenquelle mit der ungehärteten Zusammensetzung kann, wie oben beschrieben, durch vorheriges Auftragen des mindestens einen Indikatorfarbstoffs und der mindestens einen Protonenquelle auf ein Trägermaterial, nachträglichem Ablösen vom Trägermaterial und Vermischen des mindestens einen Indikatorfarbstoffs und der mindestens einen Protonenquelle mit der auf dem Träger aufgebrachten Zusammensetzung, erfolgen.

Dadurch, dass das erfindungsgemäße Indikatorsystem durch Vergleich mit einer Farbreferenz den frühsten, technisch sinnvollen Zeitpunkt der Weiterverarbeitung anzeigt, kann es zur Erhöhung der Taktfrequenz in Prozessen eingesetzt werden, bei denen beispielsweise eine berührungslose Bestimmung des Aushärtungsgrades einer Beschichtung notwendig ist und eine berührungslose, aber auf Apparate beruhende Bestimmung des Aushärtungsgrades einer Beschichtung unerwünscht oder unwirtschaftlich ist. Anstelle eines Apparates wird die Fähigkeit des menschlichen Auges genutzt, Farbtöne hinreichend genau vergleichen zu können. Ein Verfahren, das aus mindestens einem Beschichtungsschritt, aus mindestens einem Schritt zur Aushärtung der im Beschichtungsschritt auf mindestens ein Substrat aufgebrachten Beschichtung bzw. Zusammensetzung sowie mindestens einem Schritt, bei dem das beschichtete Substrat weiterverarbeitet wird und zu dem die Beschichtung bis zu einem definierten Grad ausgehärtet sein muss, kann durch Einsatz des Indikatorsystems in seiner Taktzeit beschleunigt werden. Dem Fachmann ist klar, dass der Grad der Aushärtung der Beschichtung bzw. Zusammensetzung, abhängig von dem sich anschließenden Verfahrensschritt bzw. der Weiterverarbeitung ist. Beispiele für den sich anschließenden Verfahrensschritt bzw. die Weiterverarbeitung sind Schleifen, Polieren, Verpacken, Montieren, Laminieren, Bedrucken, Lasern, Fügen, Beschichten, Waschen, Reinigen, Stanzen, Nähen, Aufwickeln, Stapeln, Verformen, Testen, unter elektrischen Strom setzen, aus geschützter Umgebung verbringen oder Überlackieren.

Ein weiterer Gegenstand der vorliegenden Erfindung ist die Verwendung eines Indikatorfarbstoffs mit Xanthen-Grundgerüst, in Gegenwart von mindestens einer Protonenquelle, vorzugsweise mit Fluoran-Grundgerüst, zur optischen Anzeige des Aushärtungsfortschritts von Zusammensetzungen enthaltend mindestens eine NCO-reaktive Verbindung und mindestens ein Polyisocyanat, dadurch gekennzeichnet, dass der Indikatorfarbstoff nach Inkontaktbringen mit der ungehärteten Zusammensetzung eine erste Farbe aufweist und in der ausreichend ausgehärteten Zusammensetzung farblos ist.

Bei dem erfindungsgemäß verwendeten Indikatorfarbstoffs, der mindestens einen Protonenquelle und der verwendeten Zusammensetzung umfassend mindestens eine NCO-reaktive Verbindung und mindestens ein Polyisocyanat handelt es sich um das erfindungsgemäße Indikatorsystem. Die oben hierzugetroffen Aussagen bezüglich weiterer Aufführungsformen und Herstellungswegen und möglichen Verarbeitungsschritten gelten analog für das erfindungsgemäße Verfahren.

Das Inkontaktbringen des Indikatorfarbstoffs, in Gegenwart der mindestens einen Protonenquelle, mit der ungehärteten Zusammensetzung kann, wie oben beschrieben, durch vorheriges Auftragen des Indikatorfarbstoffs und der mindestens einen Protonenquelle auf ein Trägermaterial, nachträglichem Ablösen vom Trägermaterial und Vermischen des Indikatorfarbstoffs und der mindestens einen Protonenquelle mit der auf dem Träger aufgebrachten Zusammensetzung, erfolgen.

In einer bevorzugten Ausführungsform ist die Zusammensetzung ein Polyurethan- und/oder Polyharnstofflack, vorzugsweise ein Polyurethan- und/oder Polyharnstoff-Refinish-Klarlack, insbesondere ein Refinish-Klarlack auf Basis von Polyasparaginsäureesterderivaten.

Des Weiteren soll die vorliegende Erfindung durch die folgenden Beispiele veranschaulicht werden.

### Beispiele

### 1) Allgemeines

**1.1) Bestimmung des Trockengrades** in Anlehnung an DIN EN ISO 9117-5:2012: Es wurde der zu prüfende Beschichtungsstoff mit einer Lackhantel auf einer Glasplatte aufgezogen. Die Zeitmessung begann mit dem Aufziehen.

**Trockengrad** 1 (T1) wurde vergeben, wenn sich etwa 0,5 g feine Glasperlen (Durchmesser 2 mm), die auf die Oberfläche gestreut wurden, mit einem Haarpinsel entfernen ließen.

Für **Trockengrad 2 bis 4** (T2 bis T4) wurde die Beschichtung auf einem Filterpapier mit unterschiedlichen Gewichten (T2 20g, T3 200g, T4 2kg) für die Dauer von 60 s belastet und danach die Probenplatte senkrecht aus etwa 30 mm Höhe auf die Tischplatte fallen gelassen. Fiel das Papier ab, war der Trocknungsgrad erreicht.

**Trocknungsgrad 5** (T5) wurde wie Trocknungsgrad 4 geprüft. Hierzu durfte allerdings keine Veränderung der belasteten Beschichtungsoberfläche erkennbar sein.

**1.2) Farbwerte** nach Farbskala: Es wurde eine Farbskala erstellt, die dann mit dem visuellen Eindruck der Beschichtungen verglichen wurde. Die Farbskala wurde mit Hilfe der RGB-Farbraum-Vorgaben der Microsoft® Excel® 2010 Software (Zellen formatieren/Ausfüllen/Weitere Farben/Benutzerdefiniert) erstellt, wobei jedem Farbton eine Nummer in Reihenfolge sinkender Farbintensität (von 1 - sehr intensiv Magenta rot bis 14 - farblos) zugeordnet wurde und mit einem handelsüblichen Drucker (RICOH MP C 3003) auf weißem Papier (Bezeichnung IQ appeal 80 g/m² der Fa. Mondi Paper Sales Deutschland GmbH, Unterföhring, DE) ausgedruckt.

Zur visuellen Beurteilung wurden Klarlacke in einer Schichtstärke von 200 µm nass mittels eines Filmziehrahmens (Byk-Gardner GmbH, Geretsried, DE) auf eine farblose Glasplatte aufgezogen. Dann wurde die beschichtete Glasplatte auf ein weißes Blatt Papier (Hersteller wie oben) gelegt und der Farbton während und/oder nach der Trocknung/Härtung visuell mit der Farbskala verglichen.

**Tabelle 1: Farbskala basierend auf Farbmodell RGB**

| Definierter Farbwert | Rot | Grün | Blau |
|---|---|---|---|
| 1 (stark rot bis magenta) | 230 | 0 | 126 |
| 2 | 255 | 21 | 149 |
| 3 | 255 | 41 | 158 |
| 4 | 255 | 63 | 168 |
| 5 | 255 | 83 | 177 |
| 6 | 255 | 101 | 185 |
| 7 | 255 | 121 | 194 |
| 8 | 255 | 143 | 204 |
| 9 | 255 | 163 | 213 |
| 10 | 255 | 183 | 222 |
| 11 | 255 | 201 | 231 |
| 12 | 255 | 221 | 240 |
| 13 | 255 | 243 | 250 |
| 14 (farblos) | 255 | 255 | 255 |

### 1.3) Verwendete Chemikalien

Die folgenden Farbstoffe wurden von der Fa. Sigma-Aldrich Chemie GmbH, München, DE bezogen und ohne weitere Vorbehandlung eingesetzt.
Farbstoff #1 (E = erfindungsgemäß): 2',4',5',7'-Tetrabromo-3,4,5,6-tetrachlorofluorescein
Farbstoff #2 (E): 2',4',5',7'-Tetrabromofluorescein Dinatriumsalz (Eosin Y)
Farbstoff #3 (E): 2',4',5',7'-Tetraiodofluorescein (Erythrosin B)
Farbstoff #4 (E): 3,4,5,6-Tetrachloro-2',4',5',7'-tetraiodofluorescein (Bengalrosa)
Farbstoff #5 (E): 2',4',5',7'-Tetrabromo-3,4,5,6-tetrachlorofluorescein Dinatriumsalz (Phloxin B)
Farbstoff #6 (V = Vergleichsbeispiel): 2,6-Diphenyl-4-(2,4,6-triphenyl-1-pyridinio)phenolat (Reichardt-Farbstoff)
Farbstoff #7 (V): 5-Amino-9-(diethylamino)benzo[a]phenoxazin-7-ium (Nilblau)
Farbstoff #8 (V): 3,3-Bis-(4-dimethylaminophenyl)-6-dimethylaminophthalid (Kristallviolettlacton)
Farbstoff #9 (V): 3,7-Diamino-5-phenyl-phenaziniumchlorid (Phenosafranin)
DBTL: Dibutylzinndilaurat, Katalysator, CAS 77-58-7 (Aldrich, DE),
Setalux® D A HS 1272 (72% in Butylacetat): OH-haltiges Polyacrylat-Polyol (Nuplex, NL),
MPA: 1-Methoxy-2-propylacetat, CAS 108-65-6, Lösemittel (BASF SE, DE),
Butylacetat: Essigsäure-n-butylester, CAS 123-86-4, Lösemittel (BASF SE, DE),
Xylen: Lösemittel (Azelis, BE)
Diacetonalkohol: Lösemittel (Sigma-Aldrich, DE)
Desmodur® N 3600: Polyisocyanat auf Basis von Trimerisaten des Hexamethylendiisocyanats, NCO-Gehalt 23,0%, Viskosität 1200 mPa s bei 23 °C (Covestro Deutschland AG, DE),
Desmodur® N 3900: Polyisocyanat auf Basis von Trimerisaten des Hexamethylendiisocyanats, NCO-Gehalt 23,5%, Viskosität 730 mPa s bei 23 °C (Covestro Deutschland AG, DE)
Bentone® 38: organisches Derivat eines Hektorit Minerals zur Rheologiesteuerung (Elementis Service Centre NV, NL)
Desmophen® NH 1420: Aminofunktioneller Reaktionspartner für Polyisocyanate, Aminzahl 200, Viskosität 1500 mPa s bei 23 °C (Covestro Deutschland AG, DE),
Desmophen® NH 1520: Aminofunktioneller Reaktionspartner für Polyisocyanate, Aminzahl 190, Viskosität 1400 mPa s bei 23 °C (Covestro Deutschland AG, DE),
Tinuvin® 292: Lichtschutzmittel "HALS" sterisch gehindertes Amin, basisch, Tinuvin® 384: Lichtschutzmittel, UV-Absorber, (beide BASF SE, DE)
Aerosil® 300: hydrophile, pyrogene Kieselsäure (Evonik Resource Efficiency GmbH, DE) Makrofol® DE 1-1 000000, Polycarbonatfolie (Covestro Deutschland AG, DE)
Haftkaschierfolie GH-X173 natur (Firma Bischof u. Klein, Deutschland)
Dibutylphosphat, racemische DL-Milchsäure, Dodecylbenzolsulfonsäure: (alle Sigma-Aldrich, DE)
Deltron Progress UHS Rapid D8135; Härter 8214, aktivierter Verdünner 8217: kommerzielles Autoreparaturklarlacksystem, alle PPG Sales and Services GmbH, DE

### 2) Beispiele

### 2.1) Beispiel 1

Herstellung einer Klarlackformulierung mit Farbstoffindikatoren sowie deren Applikation und Trocknung

**Tabelle 2: Herstellung von Indikatorfarbstofflösungen**

| Indikator lösung | Indikator - farbstoff | Menge Indikatorfarbstoff [mg] | Diacetonalkohol / Dibutylphosphat 1:1 [g] | Farbe der Lösung |
|---|---|---|---|---|
| 1 (E) | # 1 | 46 | 10 | Rot |
| 2 (E) | #2 | 54 | 10 | Orange |
| 3 (E) | #3 | 83 | 10 | Rot |
| 4 (E) | #4 | 42 | 10 | Rot |
| 5 (E) | #5 | 53 | 10 | Rot |
| 6 (V) | #6 | 47 | 10 | Blau |
| 7 (V) | #7 | 42 | 10 | Blau |
| 8 (V) | #8 | 68 | 10 | Blau |
| 9 (V) | #9 | 54 | 10 | Rot |

| | | | | |
|---|---|---|---|---|
| Legende: E = Erfindungsgemäß, V = Vergleichsbeispiel | | | | |

Die hergestellten Indikatorfarbstoffe wurden zunächst mit einer isocyanatreaktiven Lackkomponente durch Rühren vermischt. Der Farbeindruck der Lösung wurde nach Ende des Rührvorgangs aufgezeichnet (Tabelle 4). Anschließend wurde eine isocyanathaltige Komponente zugefügt, homogen verrührt, der Farbeindruck aufgezeichnet (Tabelle 4) und der Lack (siehe Tabelle 3) samt Indikatorfarbstoff mit einem Filmziehrakel in 200 µm (nass) auf eine farblose Glasplatte aufgezogen und der Farbeindruck des nassen Aufzugs wurde aufgezeichnet (Tabelle 4). Der Lack wurde bei Zimmertemperatur 16 h getrocknet und Änderungen der Farbe optisch verfolgt, bis der Lack trocken und hart war. Zum Vergleich wurde jeweils nur die isocyanatreaktive Komponente mit Indikator, aber ohne isocyanathaltige Komponente aufgezogen und getrocknet. Diese Aufzüge waren nach 16 h noch klebrig. Weiterhin wurden sowohl der Klarlack mit Indikator als auch nur die isocyanatreaktive Komponente mit Indikator jeweils in einer geschlossenen Glasflasche aufbewahrt und die Farbänderung visuell nach 16 Stunden beurteilt. Die in der Flasche aufbewahrte isocyanatreaktive Komponente blieb unverändert flüssig. Der Klarlack in der Flasche reagierte zu einer zähen Masse aus. Die beobachteten Farben der flüssigen und aufgezogenen Lacke sind in Tabelle 4 aufgeführt.

**Tabelle 3: Zusammensetzung von Lack 1 - lösemittelhaltiger 2K PU Klarlack**

| Lack 1 | Einwaage |
|---|---|
| **Isocyanatreaktive Komponente** | |
| Setalux® D A HS 1272 | 50,0 g |
| Tinuvin® 292 | 0,6 g |
| Tinuvin® 384 | 0,8 g |
| Dibutylzinndilaurat (1%ige Lösung in Essigsäure-n-butylester) | 1,6 g |
| Mischung aus Butylacetat/1-Methoxypropylacetat-2/Xylen (1/1/1) | 12,6 g |
| Indikatorfarbsto ff | 2,0 g |

| **Isocyanathaltige Komponente** | |
|---|---|
| Desmodur® N 3600 | 18,4 g |
| Mischung aus Butylacetat/1-Methoxypropylacetat-2/Xylen (1/1/1) | 14,0 g |
| **Summe (Lack)** | 100,0 g |

**Tabelle 4: Beobachtete Farbeindrücke der Indikatorfarbstofflösungen, der Mischungen der Indikatorfarbstofflösungen mit der NCO-reaktiven Komponente sowie mit der Zusammensetzung in Glasflaschen und der Lackaufzüge - sowohl unmittelbar nach dem Vermischen als auch nach 16 h Lagerung bei Zimmertemperatur**

| Beispiel | 1-1 (E) | 1-2 (E) | 1-3 (E) | 1-4 (E) | 1-5 (E) | 1-6 (V) | 1-7 (V) | 1-8 (V) | 1-9 (V) |
|---|---|---|---|---|---|---|---|---|---|
| Indikatorfarbstoff | #1 | #2 | #3 | #4 | #5 | #6 | #7 | #8 | #9 |
| Farbe der Indikatorfarbstofflösung | Rot | Rot | Rot | Rot | Rot | Blau | Blau | Blau | Rot |
| Farbe der isocyanatreaktiven Komponente mit Indikatorfarbstofflösung in der Flasche sofort | Rot | Rot | Rot | Rot | Rot | Braun | Violett | Blau | Rot |
| Farbe der isocyanatreaktiven Komponente mit Indikatorfarbstofflösung in der Flasche nach 16 h | Rot | Rot | Rot | Rot | Rot | Braun | Violett | Blau | Rot |
| Farbe des Lacks 1 mit Indikatorfarbstofflösung in der Flasche sofort | Rot | Rot | Rot | Rot | Rot | Braun | Violett | Blau | Rot |
| Farbe des Lacks 1 in der Flasche mit Indikatorfarbstofflösung in der Flasche nach 16 h | Rot | Rot | Rot | Rot | Rot | Braun | Violett | Blau | Rot |
| Glasaufzug Lack 1 sofort | Rot | Rot | Rot | Rot | Rot | Grün | Violett | Blau | Rot |
| Glasaufzug Lack 1 nach 16 h | Farblos | Farblos | Farblos | Farblos | Farblos | Grün | Violett | Blau | Rot |

Die vorstehenden Beispiele 1-1 bis 1-9 zeigen, dass alle Lacke bei Aufbewahrung in der Flasche zu einer zähen Masse reagieren, da die eingesetzten Lösemittel nicht entweichen können. Dabei verändern sie sich farblich nicht.

Die erfindungsgemäßen Beispiele 1-1 bis 1-5 zeigen, dass sich die Lacke bei Trocknung und Härtung auf einer Glasplatte farblich verändern. Die Farbintensitäten nehmen innerhalb von 16 Stunden ab. Lacke, die den Indikatorfarbstoff #1, #2, #3, #4 und #5 enthalten sind nach 16 h farblos. Die Klarlacke, die die Vergleichsfarbstoffe (solvatochrom #6; Redox- oder pH-Indikatoren #7, #8, #9) enthalten, verändern sich bei der Lacktrocknung und -aushärtung hingegen farblich nicht.

### 2.2) Beispiel 2

Die mit den Indikatoren #1, #3 und #4 versetzten Lacke aus Beispiel 1 wurden erneut auf Glasplatten aufgezogen und bei Zimmertemperatur getrocknet. Sobald der Lack vollständig entfärbt war (Farbwert 14 nach Farbskala), wurde der Trockengrad des Lackes bestimmt (Tabelle 5).

**Tabelle 5: Bestimmung des Trockengrades von Lacken mit drei verschiedenen Indikatoren**

| Beispiel 2-1 mit Lack 1 | | Beispiel 2-2 mit Lack 1 | | Beispiel 2-3 mit Lack 1 | |
|---|---|---|---|---|---|
| und Indikatorfarbstoff | Trocken-grad | und Indikatorfarbstoff | Trocken-grad | und Indikatorfarbstoff | Trocken-grad |
| #1 | T3 | #2 | T1 | #3 | T1 |

Beispiel 2 zeigt, dass sich je nach gewähltem erfindungsgemäßem Indikatorfarbstoff verschiedene Trockengrade der Beschichtungen anzeigen lassen.

### 2.3) Beispiel 3

Es wurden zwei Indikatorfarbstoffmischungen hergestellt: Als Vergleich [Indikator #10(V)] wurden 40 g Aerosil® 300 mit einen Dissolver in 380 g Diacetonalkohol zunächst bei langsamer Drehzahl eingerührt und dann für 30 min bei 1000 U/min homogenisiert. Es wurden 0,05 g des Indikatorfarbstoffs #1 in 10,8 g dieser Mischung gelöst. Erfindungsgemäß [Indikator #11(E)] wurden 0,17 g des Indikatorfarbstoffs #1 in 40,0 g der oben genannten Mischung aus Diacetonalkohol und Aerosil gelöst und mit 1,46 g Dibutylphosphat versetzt. Anschließend wurden die in Tabelle 6 beschriebenen Lacke durch Vermischen der Komponenten hergestellt. Als letztes wurde die isocyanathaltige Komponente zugegeben und die Lacke wurden unmittelbar danach mit einem Filmziehrakel in 200 µm (nass) auf eine farblose Glasplatte aufgezogen. Der Lack wurde bei Zimmertemperatur 16 h getrocknet und Änderungen der Farbe optisch verfolgt, bis der Lack trocken und hart war.

**Tabelle 6: Einfluss von Säure auf die Indikatoren in verschiedenen Lacken**

| Lack | Beispiel 3-1(V) | Beispiel 3-2(V) | Beispiel 3-3(E) |
|---|---|---|---|
| **Isocyanatreaktive Komponente** | | | |
| Setalux® D A HS 1272 | 7,5 g | 7,5 g | 7,5 g |
| Tinuvin® 292 | | 0,1 g | 0,1 g |
| Dibutylzinndilaurat (1%ige Lösung in Essigsäure-n-butylester) | 0,3 g | 0,3 g | 0,3 g |
| Mischung aus Butylacetat/1-Methoxypropylacetat-2/Xylen (1/1/1) | 3,3 g | 3,3 g | 3,3 g |
| Indikator #10(V) | 3,0 g | 3,0 g | |
| Indikator #11(E) | | | 3,0 g |

| **Isocyanathaltige Komponente** | | | |
|---|---|---|---|
| Desmodur® N 3600 | 2,8 g | 2,8 g | 2,8 g |
| **Summe (Lack)** | 16,9 g | 17,0 g | 17,0 g |
| | | | |

| Filmaufzug Glasplatte (200 µm nass), Trocknung bei RT | Farbeindrücke nach Farbskala gemäß Tabelle 1 | | |
|---|---|---|---|
| Startwert | 3 | 2 | 4 |
| Nach 1 h | 8 | 4 | 7 |
| Nach 1,5 h | 9 | 4 | 12 |
| Nach 3 h | 12 | 4 | 14 |
| Nach 5 h | 14 | 4 | 14 |
| Nach 16 h | 14 | 4 | 14 |

An den Vergleichsbeispielen 3-1 und 3-2 ist sichtbar, dass die Zugabe eines basischen Lichtschutzmittels (Tinuvin® 292) das Indikatorsystem stört, so dass der Lack 3-2 nicht mehr ausbleicht. Nur das erfindungsgemäße Indikatorsystem bleicht auch bei Anwesenheit des Lichtschutzmittels mit fortschreitender Trocknung aus.

### 2.4) Beispiel 4

Es wurde eine Indikatorfarbstofflösung hergestellt, indem 55 mg des Indikatorfarbstoffs #5 in 3,63 g Diacetonalkohol und 3,63 g 1-Methoxypropylacetat-2 gelöst wurden. Zu dieser Lösung wurden 2,00 g Bentone® 38 sowie 0,7 g Dibutylphosphat gegeben und verrührt. Diese Suspension wurde mittels eines Spiralrakels 0,5 gleichmäßig auf eine glatte Polycarbonatfolie MAKROFOL® DE 1-1 000000 (1 mm dick) aufgezogen. Anschließend wurde die Folie in einem Umluftofen für 5 min bei 95 °C getrocknet. Es resultierte eine nicht gefärbte, oberflächlich matte beschichtete Folie. Anschließend wurde die Folie auf der mit Farbstoff beschichteten Seite mit einer Haftkaschierfolie GH-X173 natur (Firma Bischof u. Klein, Lengerich, Deutschland) abgedeckt. Der Folienverbund wurde mit einer Schere in Streifen von 15 cm Länge und 15 cm Breite geschnitten.

Auf einem Folienstreifen wurde nach Entfernen der Kaschierfolien der Lack 1 aus Beispiel 1 allerdings ohne Zusatz eines Indikators aufgezogen. Innerhalb von 10 bis 30 Sekunden verfärbte sich der Lack rot. Anschließend wurde bei Zimmertemperatur getrocknet. Während der Trocknung wurde die Farbe des Lackes zu definierten Zeiten mit der Farbskala gemäß Tabelle 1 abgeglichen (Tabelle 7). Nach 240 min wurde ein Trockengrad für den Lack von T4 bestimmt.

**Tabelle 7: Zeitliche Änderung der Farbwerte nach Farbskala gemäß Tabelle 1 von auf mit Indikatorfarbstoff vorbeschichteter Polycarbonatfolie aufgezogenen Lack 1 ohne Indikatorfarbstoff während der Trocknung und Härtung**

| Zeit | Definierte Farbwerte nach Farbskala |
|---|---|
| 0,0 min [Start] | 14 (farblos) |
| 0,5 min | 5 (rot) |
| 30 min | 6 |
| 60 min | 10 |
| 90 min | 12 |
| 180 min | 13 |
| 210 min | 13 |
| 240 min | 14 (farblos) |

Das vorstehende Beispiel zeigt, dass der Indikatorfarbstoff auch auf einem Träger aufgebracht werden kann und erst beim späteren Beschichten des Trägers mit einem Klarlack diesen zunächst anfärbt und dann beim Trocknen und Aushärten wieder entfärbt.

### 2.5) Beispiel 5

Beschichtung einer mit Indiaktor vorbeschichteten Glasplatte mit einem Lack auf Basis eines Polyasparaginsäureesters und eines Polyisocyanats.

Es wurden zwei Indikatorfarbstoffmischungen hergestellt: Es wurden 60 g Bentone® 38 mit einen Dissolver in 240 g Diacetonalkohol zunächst bei langsamer Drehzahl eingerührt und dann für 30 min bei 200 U/min homogenisiert. Es wurden zum Einen 0,05 g des Indikatorfarbstoffs #1 in 10,0 g dieser Mischung gelöst [Vergleich Indikator #12(V)], zum Anderen wurden 0,05 g des Indikatorfarbstoffs #1 und 4-Dodecylbenzolsulfonsäure in 9,4 g dieser Mischung gelöst [Indikator #13(E)]. Die Indikatorfarbstoffmischungen wurden jeweils mittels eines Spiralrakels in 50 µm Nassfilmschicht auf je eine farblose Glasplatte appliziert. Die beschichteten Glasplatten wurden 5 min bei 95 °C im Umluftofen getrocknet. Anschließend wurde der in Tabelle 8 beschriebene Lack durch Vermischen der Komponenten hergestellt. Als letztes wurde die isocyanathaltige Komponente zugegeben und der Lack wurde unmittelbar danach mit einem Filmziehrakel in 200 µm (nass) auf die Indikatorfarbstoffschicht der beiden zuvor beschichteten Glasplatten aufgezogen. Der Lack wurde bei Zimmertemperatur 4 h getrocknet und Änderungen der Farbe optisch verfolgt. Der Lack war nach etwa 1 Stunde trocken und nach 2,5 Stunden hart (kein Fingerabdruck mehr sichtbar).

**Tabelle 8: Einfluss von Säure auf die Indikatoren in verschiedenen Lacken**

| Lack | Beispiel 5-1 (V) | Beispiel 5-2(E) |
|---|---|---|
| **Isocyanatreaktive Komponente** | | |
| Desmophen® NH 1420 | 7,1 g | 7,5 g |
| Desmophen® NH 1520 | 2,4 g | 2,4 g |
| Tinuvin® 292 | 0,1 g | 0,1 g |
| Butylacetat | 4,6 g | 4,6 g |

| **Isocyanathaltige Komponente** | | |
|---|---|---|
| Desmodur® N 3900 | 5,9 g | 5,9 g |
| **Summe (Lack)** | 20,1 g | 20,1 g |
| | | |

| Filmaufzug Glasplatte (200 µm nass), vorbeschichtet mit: Trocknung bei RT | Indikator #12(V) | Indikator #13(E) |
|---|---|---|
| Startwert (nach 5 min) | 4 | 4 |
| Nach 0,5 h | 5 | 9 |
| Nach 1 h | 6 | 11 |
| Nach 2 h | 6 | 12 |
| Nach 3 h | 6 | 13 |
| Nach 4 h | 6 | 13 |

Nur beim erfindungsgemäßen Beispiel 5-2 mit Säure in der Indikatorfarbstoffmischung findet ein Ausbleichen des Lacks auf der Glasplatte statt. Trotz gleichen Farbstoffs verändert sich der gleiche Lack ohne Säure in der Indikatorfarbstoffmischung im Vergleichsbeispiel nicht.

### 2.6) Beispiel 6

Es wurde eine Indikatorfarbstoffmischung hergestellt, indem 100 mg des Indikatorfarbstoffs #5 in 7,26 g Diacetonalkohol und 7,26 g 1-Methoxypropylacetat-2 gelöst wurden. Zu dieser Lösung wurden 4,00 g Bentone® 38 sowie 1,24 g racemische Milchsäure gegeben und die Mischung wurde homogenisiert. Diese Mischung wurde wie in Beispiel 4 auf eine Folie aufgezogen und getrocknet. Ein 15 cm mal 15 cm großes Stück dieser Folie wurde an einen Substratträger in einer Lackierkabine mit Hilfe von doppelseitigem Klebeband derart befestigt, dass das Folienstück beim Lackieren mit Klarlack eines mit Primer und Basislack vorbeschichteten Blechs mit beschichtet wurde. Es wurde ein handelsüblicher 2K PU Klarlack der Fa. PPG Sales and Services GmbH, DE (Deltron Progress UHS Rapid D8135; Härter 8214, aktivierter Verdünner 8217, Mischungsverhältnis 3 : 1 : 0,6) gemäß Angaben im technischen Merkblatt RLD212V vom Dezember 2008 in 50 µm Trockenschichtstärke mit einer Druckluftspritzpistole aufgebracht. Das lackierte Blech und die lackierte Folie wurden 3,5 h bei Zimmertemperatur getrocknet.

Die so beschichtete Folie wurde bezüglich ihrer Farbentwicklung gemäß Farbskala beurteilt, parallel wurde die Aushärtung des Klarlacks auf dem Blech beurteilt (Tabelle 9).

**Tabelle 9: Farbentwicklung einer mit einem kommerziellen Autoreparaturklarlack lackierten Folie, die zuvor Indikatorfarbstoff beschichtet worden war, sowie Aushärtungsverlauf des gleichzeitig beschichteten Blechs**

| Farbverlauf Lack auf Folie | Farbe nach Skala | Aushärtung auf Blech |
|---|---|---|
| Startwert (nach 5 min) | 7 | klebrig |
| Nach 0,5 h | 10 | leicht klebrig |
| Nach 1 h | 12 | grifftrocken |
| Nach 2,5 h | 13 | trocken |
| Nach 3,5 h | 13 | hart |

Das Beispiel zeigt, dass sich die Aushärtung des Lacks auf dem Blech auch durch den Farbverlauf der mitbeschichteten Folie, die mit Indikator vorbeschichtet war, anzeigen lässt.

## Patentansprüche

1. Indikatorsystem beinhaltend eine Zusammensetzung, welche mindestens eine NCO-reaktive Verbindung und mindestens ein Polyisocyanat enthält, mindestens eine Protonenquelle und mindestens einen Indikatorfarbstoff, wobei der mindestens eine Indikatorfarbstoff zumindest ein Xanthen-Grundgerüst aufweist, zur Anzeige der Aushärtung der Zusammensetzung durch Farbänderung des mindestens einen Indikatorfarbstoffs, **dadurch gekennzeichnet, dass** der mindestens eine Indikatorfarbstoff nach Inkontaktbringen mit der ungehärteten Zusammensetzung eine erste Farbe aufweist und in der ausgehärteten Zusammensetzung farblos ist.

2. Indikatorsystem nach Anspruch 1, **dadurch gekennzeichnet, dass** der mindestens eine Indikatorfarbstoff und die mindestens eine Protonenquelle auf einer Oberfläche eines inerten Trägers aufgebracht sind, wobei der inerte Träger gegebenenfalls mit einer zweiten Oberfläche, welche von der ersten Oberfläche abgewandt ist, auf einem zweiten inerten Träger aufgebracht ist, wobei der zweite Träger vorzugsweise ausgewählt ist aus der Gruppe bestehend aus Polymerfolien, Metallfolien, Papier und/oder Karton und wobei der inerte Träger farblos und transparent und der zweite Träger vorzugsweise weiß ist.

3. Indikatorsystem nach einem der vorhergehenden Ansprüche, **dadurch gekennzeichnet, dass** der mindestens eine Indikatorfarbstoff zumindest ein Fluoran-Grundgerüst aufweist, vorzugsweise ausgewählt ist aus der Gruppe der Fluorescein- und Rhodaminderivate, die eine Spirolactonform bilden können, und / oder Mischungen aus mindestens zwei hieraus.

4. Indikatorsystem nach einem der vorhergehenden Ansprüche, **dadurch gekennzeichnet, dass** die mindestens eine Protonenquelle eine Brønsted-Säure ist, vorzugsweise eine nichtpolymere Säure, bevorzugter eine nichtpolymere, filmbildende Säure ist.

5. Indikatorsystem nach Anspruch 4, **dadurch gekennzeichnet, dass** die Brønsted-Säure ausgewählt ist aus der Gruppe bestehend aus nichtpolymeren Carbonsäuren, Hydroxycarbonsäuren, organisch substituierter Phosphor- und Sulfonsäuren und / oder Mischungen aus mindestens zwei hieraus.

6. Indikatorsystem nach einem der vorhergehenden Ansprüche, **dadurch gekennzeichnet, dass** das mindestens eine Polyisocyanat in der Zusammensetzung ein aliphatisches und/oder cycloaliphatisches Polyisocyanat ist, wobei das Polyisocyanat vorzugsweise ausgewählt ist aus der Gruppe bestehend aus Derivaten des Hexamethylendiisocyanats und/oder des Pentamethylendiisocyanats.

7. Indikatorsystem nach einem der vorhergehenden Ansprüche, **dadurch gekennzeichnet, dass** die mindestens eine NCO-reaktive Verbindung ausgewählt ist aus der Gruppe bestehend aus Polyasparaginsäureestern, Polyacrylatpolyolen, Polyesterpolyolen und / oder Mischungen aus mindestens zwei hieraus.

8. Indikatorsystem nach einem der vorhergehenden Ansprüche, **dadurch gekennzeichnet, dass** die Zusammensetzung ein Polyurethan- und/oder Polyharnstofflack, vorzugsweise ein Polyurethan- und/oder Polyharnstoff-Refinish-Klarlack, insbesondere ein Refinish-Klarlack auf Basis von Polyasparaginsäureesterderivaten ist.

9. Verfahren zur optischen Anzeige des Aushärtungsfortschritts einer Zusammensetzung, welche mindestens eine NCO-reaktive Verbindung und mindestens ein Polyisocyanat enthält, **dadurch gekennzeichnet, dass** das Verfahren die folgenden Schritte umfasst:
(a) Bereitstellen mindestens eines Indikatorfarbstoffs und mindestens einer Protonenquelle, wobei der mindestens eine Indikatorfarbstoff zumindest ein Xanthen-Grundgerüst aufweist, und wobei der mindestens eine Indikatorfarbstoff und die mindestens eine Protonenquelle auf einer Oberfläche eines inerten Trägers aufgebracht sind,
(b) Inkontaktbringen des mindestens einen Indikatorfarbstoffs und der mindestens einen Protonenquelle aus Schritt (a) mit der ungehärteten Zusammensetzung, wobei der mindestens eine Indikatorfarbstoff eine erste Farbe aufweist, und
(c) Härten der Zusammensetzung, wobei der mindestens eine Indikatorfarbstoff durch Farbumschlag von der ersten Farbe nach farblos die Aushärtung der Zusammensetzung anzeigt.

10. Verfahren nach Anspruch 9, wobei der inerte Träger eine Polymerfolie oder ein Glasfaservlies, bevorzugt eine Polymerfolie, insbesondere eine Polyethylenterephthalat- oder Polycarbonatfolie ist.

11. Verfahren nach einem der Ansprüche 9 bis 10, **dadurch gekennzeichnet, dass** der inerte Träger mit einer zweiten Oberfläche, welche von der ersten Oberfläche abgewandt ist, auf einem zweiten inerten Träger aufgebracht ist, wobei der zweite Träger vorzugsweise ausgewählt ist aus der Gruppe bestehend aus Polymerfolien, Metallfolien, Papier und/oder Karton und wobei der inerte Träger farblos und transparent und der zweite Träger vorzugsweise weiß ist.

12. Verfahren zur optischen Ermittlung des Aushärtungsfortschritts einer Zusammensetzung enthaltend mindestens eine NCO-reaktive Verbindung und mindestens ein Polyisocyanat, mit mindestens einem Indikatorfarbstoff und mindestens einer Protonenquelle, wobei der mindestens eine Indikatorfarbstoff zumindest ein Xanthen-Grundgerüst aufweist, **dadurch gekennzeichnet, dass** nach Inkontaktbringen des mindestens einen Indikatorfarbstoffs und der mindestens einen Protonenquelle mit der Zusammensetzung, die Farbe des mindestens einen Indikatorfarbstoffs mit einer Farbskala verglichen wird, um den Aushärtungsfortschritt zu ermitteln.

13. Verwendung eines Indikatorfarbstoffs mit Xanthen-Grundgerüst, vorzugsweise mit Fluoran-Grundgerüst, in Gegenwart von mindestens einer Protonenquelle zur optischen Anzeige des Aushärtungsfortschritts von Zusammensetzungen enthaltend mindestens eine NCO-reaktive Verbindung und mindestens ein Polyisocyanat, **dadurch gekennzeichnet, dass** der mindestens eine Indikatorfarbstoff nach Inkontaktbringen mit der ungehärteten Zusammensetzung eine erste Farbe aufweist und in der ausreichend ausgehärteten Zusammensetzung farblos ist, wobei die Zusammensetzung vorzugsweise ein Polyurethanlack, bevorzugter ein Polyurethan-Refinish-Klarlack, noch bevorzugter ein Refinish-Klarlack auf Basis von Polyasparaginsäureesterderivaten ist.

14. Kit-of-parts umfassend mindestens einen Indikatorfarbstoff, wobei der mindestens eine Indikatorfarbstoff zumindest ein Xanthen-Grundgerüst aufweist, mindestens eine Protonenquelle, eine Zusammensetzung enthaltend mindestens eine NCO-reaktive Verbindung und mindestens ein Polyisocyanat, wobei der mindestens eine Indikatorfarbstoff und die mindestens eine Protonenquelle vorzugsweise auf einer Oberfläche eines inerten Träger aufgebracht sind, vorzugsweise ist der inerte Träger mit einer zweiten Oberfläche, welche von der ersten Oberfläche abgewandt ist, auf einem zweiten inerten Träger aufgebracht, wobei der zweite Träger vorzugsweise weiß ist.

15. Verfahren zur Erhöhung der Taktfrequenz zwischen einem Beschichtungsschritt und einem weiteren nachfolgenden Verarbeitungsschritt bei Objekten, die mit einer Zusammensetzung, welche mindestens eine NCO-reaktive Verbindung und mindestens ein Polyisocyanat enthält, beschichtet werden, **dadurch gekennzeichnet, dass** mindestens ein Indikatorfarbstoff, in Gegenwart von mindestens einer Protonenquelle, mit der Zusammensetzung in Kontakt gebracht wird um den Aushärtungsfortschritt der Beschichtung anzuzeigen, wobei der mindestens eine Indikatorfarbstoff zumindest ein Xanthen-Grundgerüst aufweist.

## Claims

1. Indicator system comprising a composition which comprises at least one NCO-reactive compound and at least one polyisocyanate, and comprising at least one proton source and at least one indicator dye, the at least one indicator dye having at least one xanthene skeleton, for indicating the curing of the composition by change in color of the at least one indicator dye, **characterized in that** the at least one indicator dye has a first color after contacting with the uncured composition and in the cured composition is colorless.

2. Indicator system according to Claim 1, **characterized in that** the at least one indicator dye and the at least one proton source are applied on a surface of an inert carrier, the inert carrier optionally being applied with a second surface, which faces away from the first surface, on a second inert carrier, the second carrier preferably being selected from the group consisting of polymer foils, metal foils, paper and/or card, and the inert carrier being colorless and transparent, and the second carrier preferably being white.

3. Indicator system according to either of the preceding claims, **characterized in that** the at least one indicator dye has at least one fluoran skeleton, and preferably is selected from the group of fluorescein derivatives and rhodamine derivatives which are able to form a spirolactone form, and/or mixtures of at least two thereof.

4. Indicator system according to any of the preceding claims, **characterized in that** the at least one proton source is a Brønsted acid, preferably a nonpolymeric acid, more preferably a nonpolymeric, film-forming acid.

5. Indicator system according to Claim 4, **characterized in that** the Brønsted acid is selected from the group consisting of nonpolymeric carboxylic acids, hydroxycarboxylic acids, phosphoric and sulfonic acids with organic substitution, and/or mixtures of at least two thereof.

6. Indicator system according to any of the preceding claims, **characterized in that** the at least one polyisocyanate in the composition is an aliphatic and/or cycloaliphatic polyisocyanate, the polyisocyanate preferably being selected from the group consisting of derivatives of hexamethylene diisocyanate and/or of pentamethylene diisocyanate.

7. Indicator system according to any of the preceding claims, **characterized in that** the at least one NCO-reactive compound is selected from the group consisting of polyaspartic esters, polyacrylate polyols, polyester polyols, and/or mixtures of at least two thereof.

8. Indicator system according to any of the preceding claims, **characterized in that** the composition is a polyurethane and/or polyurea coating material, preferably a polyurethane and/or polyurea refinish clearcoat, more particularly a refinish clearcoat based on polyaspartic ester derivatives.

9. Method for optically indicating the curing progress of a composition which comprises at least one NCO-reactive compound and at least one polyisocyanate, **characterized in that** the method comprises the following steps:
(a) providing at least one indicator dye and at least one proton source, the at least one indicator dye having at least one xanthene skeleton, and the at least one indicator dye and the at least one proton source being applied on a surface of an inert carrier,
(b) contacting the at least one indicator dye and the at least one proton source from step (a) with the uncured composition, the at least one indicator dye having a first color, and
(c) curing the composition, the at least one indicator dye indicating the curing of the composition through color switch from the first color to colorless.

10. Method according to Claim 9, the inert carrier being a polymer foil or a glass fiber web, preferably a polymer foil, more particularly a polyethylene terephthalate or polycarbonate foil.

11. Method according to either of Claims 9 and 10, **characterized in that** the inert carrier, by a second surface, which faces away from the first surface, is applied on a second inert carrier, the second carrier preferably being selected from the group consisting of polymer foils, metal foils, paper and/or card, and the inert carrier being colorless and transparent, and the second carrier preferably being white.

12. Method for optically ascertaining the curing progress of a composition comprising at least one NCO-reactive compound and at least one polyisocyanate, with at least one indicator dye and at least one proton source, the at least one indicator dye having at least one xanthene skeleton, **characterized in that**, after contacting of the at least one indicator dye and of the at least one proton source with the composition, the color of the at least one indicator dye is compared with a color scale in order to ascertain the curing progress.

13. Use of an indicator dye with xanthene skeleton, preferably with fluoran skeleton, in the presence of at least one proton source, for optically indicating the curing progress of compositions comprising at least one NCO-reactive compound and at least one polyisocyanate, **characterized in that** the at least one indicator dye has a first color after contacting with the uncured composition and in the sufficiently cured composition is colorless, the composition preferably being a polyurethane coating material, more preferably a polyurethane refinish clearcoat, more preferably still a refinish clearcoat based on polyaspartic ester derivatives.

14. Kit of parts comprising at least one indicator dye, the at least one indicator dye having at least one xanthene skeleton, and comprising at least one proton source, a composition comprising at least one NCO-reactive compound and at least one polyisocyanate, the at least one indicator dye and the at least one proton source preferably being applied on a surface of an inert carrier, the inert carrier preferably being applied by a second surface, which faces away from the first surface, on a second inert carrier, the second carrier preferably being white.

15. Method for increasing the cycle frequency between a coating step and a further downstream step in the processing of objects which are coated with a composition which comprises at least one NCO-reactive compound and at least one polyisocyanate, **characterized in that** at least one indicator dye is contacted with the composition in the presence of at least one proton source in order to indicate the curing progress of the coating, the at least one indicator dye having at least one xanthene skeleton.

## Revendications

1. Système d'indicateur contenant une composition, laquelle contient au moins un composé réactif envers NCO et au moins un polyisocyanate, au moins une source de protons et au moins un colorant indicateur, l'au moins un colorant indicateur présentant au moins un squelette de base de type xanthène, destiné à l'indication du durcissement de la composition par un changement de couleur de l'au moins un colorant indicateur, **caractérisé en ce que** l'au moins un colorant indicateur présente une première couleur après la mise en contact avec la composition non durcie et est incolore dans la composition durcie.

2. Système d'indicateur selon la revendication 1, **caractérisé en ce que** l'au moins un colorant indicateur et l'au moins une source de protons sont appliqués sur une surface d'un support inerte, le support inerte étant éventuellement appliqué avec une deuxième surface, laquelle est opposée à la première surface, sur un deuxième support inerte, le deuxième support étant de préférence choisi dans le groupe constitué par des feuilles de polymère, des feuilles métalliques, du papier et/ou du carton et le support inerte étant incolore et transparent et le deuxième support étant de préférence blanc.

3. Système d'indicateur selon l'une quelconque des revendications précédentes, **caractérisé en ce que** l'au moins un colorant indicateur présente au moins un squelette de base de type fluorane, de préférence choisi dans le groupe des dérivés de la fluorescéine et de la rhodamine, qui peuvent former une forme de spirolactone, et/ou parmi des mélanges d'au moins deux de ceux-ci.

4. Système d'indicateur selon l'une quelconque des revendications précédentes, **caractérisé en ce que** l'au moins une source de protons est un acide de Brönsted, de préférence un acide non polymérique, plus préférablement un acide filmogène non polymérique.

5. Système d'indicateur selon la revendication 4, **caractérisé en ce que** l'acide Brönsted est choisi dans le groupe constitué par des acides carboxyliques non polymériques, des acides hydroxycarboxyliques, des acides phosphoriques substitués de manière organique et des acides sulfoniques substitués de manière organique et/ou des mélanges d'au moins deux de ceux-ci.

6. Système d'indicateur selon l'une quelconque des revendications précédentes, **caractérisé en ce que** l'au moins un polyisocyanate dans la composition est un polyisocyanate aliphatique et/ou cycloaliphatique, le polyisocyanate étant de préférence choisi dans le groupe constitué par des dérivés du diisocyanate d'hexaméthylène et/ou du diisocyanate de pentaméthylène.

7. Système d'indicateur selon l'une quelconque des revendications précédentes, **caractérisé en ce que** l'au moins un composé réactif envers NCO est choisi dans le groupe constitué par des poly(ester d'acide aspartique), des polyacrylatepolyols, des polyesterpolyols et/ou des mélanges d'au moins deux de ceux-ci.

8. Système d'indicateur selon l'une quelconque des revendications précédentes, **caractérisé en ce que** la composition est une laque de polyuréthane et/ou de polyurée, de préférence une laque transparente de retouche de polyuréthane et/ou de polyurée, en particulier une laque transparente de retouche à base de dérivés de poly(ester d'acide aspartique).

9. Procédé pour l'indication optique de l'avancement du durcissement d'une composition, laquelle contient au moins un composé réactif envers NCO et au moins un polyisocyanate, **caractérisé en ce que** le procédé comprend les étapes suivantes :
(a) mise à disposition d'au moins un colorant indicateur et d'au moins une source de protons, l'au moins un colorant indicateur présentant au moins un squelette de base de type xanthène, et l'au moins un colorant indicateur et l'au moins une source de protons étant appliqués sur une surface d'un support inerte,
(b) mise en contact de l'au moins un colorant indicateur et de l'au moins une source de protons de l'étape (a) avec la composition non durcie, l'au moins un colorant indicateur présentant une première couleur, et
(c) durcissement de la composition, l'au moins un colorant indicateur indiquant le durcissement de la composition par virage de couleur de la première couleur à incolore.

10. Procédé selon la revendication 9, le support inerte étant une feuille de polymère ou un non-tissé en fibres de verre, préférablement une feuille de polymère, en particulier une feuille de poly(téréphtalate d'éthylène) ou de polycarbonate.

11. Procédé selon l'une quelconque des revendications 9 à 10, **caractérisé en ce que** le support inerte est éventuellement appliqué avec une deuxième surface, laquelle est opposée à la première surface, sur un deuxième support inerte, le deuxième support étant de préférence choisi dans le groupe constitué par des feuilles de polymère, des feuilles métalliques, du papier et/ou du carton et le support inerte étant incolore et transparent et le deuxième support étant de préférence blanc.

12. Procédé pour la détermination optique de l'avancement du durcissement d'une composition contenant au moins un composé réactif envers NCO et au moins un polyisocyanate, comportant au moins un colorant indicateur et au moins une source de protons, l'au moins un colorant indicateur présentant au moins un squelette de base de type xanthène, **caractérisé en ce qu'**après la mise en contact de l'au moins un colorant indicateur et de l'au moins une source de protons avec la composition, la couleur de l'au moins un colorant indicateur est comparée avec une échelle de couleur afin de déterminer l'avancement du durcissement.

13. Utilisation d'un colorant indicateur comportant un squelette de base de type xanthène, de préférence comportant un squelette de base de type fluorane, en présence d'au moins une source de protons pour l'indication optique de l'avancement du durcissement de compositions contenant au moins un composé réactif envers NCO et au moins un polyisocyanate, **caractérisée en ce que** l'au moins un colorant indicateur présente une première couleur après la mise en contact avec la composition non durcie et est incolore dans la composition suffisamment durcie, la composition étant de préférence une laque de polyuréthane, préférablement une laque transparente de retouche de polyuréthane, encore plus préférablement une laque transparente de retouche à base de dérivés de poly(ester d'acide aspartique).

14. Kit de pièces comprenant au moins un colorant indicateur, l'au moins un colorant indicateur présentant au moins un squelette de base de type xanthène, au moins une source de protons, une composition contenant au moins un composé réactif envers NCO et au moins un polyisocyanate, l'au moins un colorant indicateur et l'au moins une source de protons étant de préférence appliqués sur une surface d'un support inerte, le support inerte étant de préférence appliqué avec une deuxième surface, laquelle est opposée à la première surface, sur un deuxième support inerte, le deuxième support inerte étant de préférence blanc.

15. Procédé pour l'augmentation de la fréquence de rythme entre une étape de revêtement et une étape de traitement supplémentaire consécutive pour des objets qui sont revêtus avec une composition, laquelle contient au moins un composé réactif envers NCO et au moins un polyisocyanate, **caractérisé en ce qu'**au moins un colorant indicateur, en présence d'au moins une source de protons, est mis en contact avec la composition afin d'indiquer l'avancement du durcissement du revêtement, l'au moins un colorant indicateur présentant au moins un squelette de base de type xanthène.
